# EUROPEAN PATENT APPLICATION

(11) **EP 4 528 249 A1**
(43) Date of publication of application: **26.03.2025**
(21) Application number: 23807364.7
(22) Date of filing: 18.04.2023
(51) Int. Cl.: G01N 15/14, G01N 37/00

(54) **MICROPARTICLE ISOLATION DEVICE AND MICROPARTICLE ISOLATION METHOD**

(30) Priority: 16.05.2022 JP 2022079978
(71) Applicant: Sony Group Corporation, Tokyo 108-0075 (JP)
(72) Inventor: NAKAMURA, Masahiko, Tokyo 108-0075 (JP)
(74) Representative: D Young & Co LLP
(86) International application number: PCT/JP2023/015500
(87) International publication number: WO 2023/223752

(57) **Abstract**

A main object of the present technology is to provide a microparticle sorting device and a microparticle sorting method capable of sorting a target microparticle with high efficiency.

The present technology provides a microparticle sorting device or the like including a channel structure including a main channel through which a first liquid containing microparticles flows, a recovery channel through which a recovery target particle among the microparticles is recovered, and a connection channel connecting the main channel and the recovery channel; and a control unit that applies a pressure change in the recovery channel and recovers the recovery target particle into the recovery channel, in which the control unit performs a recovery operation Cr of applying a pressure change in a positive direction to generate a pressure vibration PVr in the recovery channel and of recovering the recovery target particle by a pressure change in a negative direction caused by the pressure vibration PVr**.**

## Description

### TECHNICAL FIELD

The present technology relates to a microparticle sorting device and a microparticle sorting method.

### BACKGROUND ART

The microparticle sorting device can be used for the purpose of sorting and recovering a specific microparticle from a sample. For example, the microparticle sorting device forms a sheath flow containing microparticles in a channel, irradiates the microparticles in the sheath flow with light to detect fluorescence and/or scattered light emitted from the microparticles. Therefore, a microparticle group (population) exhibiting predetermined optical characteristics is sorted and recovered. A flow cytometer, which is an example of a microparticle sorting device, sorts and recovers only cells of a specific type by optically identifying each cell labeled with a fluorescent dye.

Patent Documents 1 and 2 disclose a microchip-type microparticle sorting device that forms a sheath flow in a main channel formed in a microchip to sort microparticles. The microparticle sorting device disclosed in Patent Documents 1 and 2 includes a branch channel communicating with a main channel, and an actuator that generates a negative pressure in the branch channel.

The microparticle sorting device disclosed in Patent Document 1 applies a voltage of a step waveform component with an undershoot waveform and a pulse waveform to the actuator. The microparticle sorting device disclosed in Patent Document 2 applies a drive waveform that is any one of a pulse waveform, a step waveform, or a step waveform with undershoot to the actuator, and controls the application of the pulse waveform separately for a falling waveform section and a rising waveform section.

The microparticle sorting device disclosed in Patent Documents 1 and 2 applies a falling drive waveform to the actuator to make the inside of the branch channel have a negative pressure. Therefore, a flow directed from the main channel to the branch channel is formed, and the microparticles are taken into the branch channel from the main channel. Moreover, these microparticle sorting devices apply a rising drive waveform to the actuator to generate a positive pressure in the branch channel and to cause the inside of the branch channel to return to the original state. That is, in these microparticle sorting devices, the application of the rising drive waveform is performed as a return operation of the actuator.

### CITATION LIST

### PATENT DOCUMENT

Patent Document 1: WO 2014/013802 A
Patent Document 2: Japanese Patent Application Laid-Open No. 2014-039534

### SUMMARY OF THE INVENTION

### PROBLEMS TO BE SOLVED BY THE INVENTION

The present inventors have considered that an operation time at the time of the application of the rising drive waveform in the microparticle sorting device in the related art is a time during which microparticles are not sorted, and is a dead time from the viewpoint of sorting efficiency. The present inventors have considered that the sorting efficiency of microparticles can be improved by reducing such a dead time.

Thus, a main object of the present technology is to provide a microparticle sorting device and a microparticle sorting method capable of sorting a target microparticle with high efficiency.

### SOLUTIONS TO PROBLEMS

In order to solve the problems described above, the present inventors have studied a device capable of performing sorting at a specific time in which microparticles are not sorted in a microparticle sorting device in the related art, and as a result, have completed the present technology.

That is, the present technology provides a microparticle sorting device including a channel structure including a main channel through which a first liquid containing microparticles flows, a recovery channel through which a recovery target particle among the microparticles is recovered, and a connection channel connecting the main channel and the recovery channel; and a control unit that applies a pressure change in the recovery channel and recovers the recovery target particle into the recovery channel, in which the control unit performs a recovery operation Cr of applying a pressure change in a positive direction to generate a pressure vibration PVr in the recovery channel and of recovering the recovery target particle by a pressure change in a negative direction caused by the pressure vibration PVr.

The control unit may apply the pressure change in the negative direction in the recovery channel and perform a recovery operation Cf of recovering the recovery target particle by the pressure change in the negative direction.

The control unit may be configured to alternately perform the recovery operation Cf and the recovery operation Cr.

The microparticle sorting device may further include a particle detection unit that detects the microparticle that has passed through a predetermined position in the main channel, and the control unit may be configured to perform the recovery operation Cf or the recovery operation Cr according to an interval TIx of time points when the particle detection unit has detected two continuous microparticles.

The control unit may be configured to recover the microparticle detected earlier among the two continuous microparticles by the recovery operation Cf, and recover the microparticle detected later among the two continuous microparticles by the recovery operation Cf in a case where the interval TIx between the time points is shorter than a predetermined value.

The microparticle sorting device may further include a particle detection unit that detects the microparticle that has passed through a predetermined position in the main channel, and the control unit may be configured to perform the recovery operation Cf after a time DTf from a time point when the particle detection unit detects the microparticle, and perform the recovery operation Cr after a time DTr from the time point when the particle detection unit detects the microparticle.

The time DTf and the time DTr may be different from each other.

The time DTr may be shorter than the time DTf.

In a case where a time T2 is required for a flow of a liquid in a predetermined section in the channel structure to return to a state before the pressure change in the positive direction is applied after the control unit applies the pressure change in the positive direction, a time interval TIz from when the control unit applies the pressure change in the positive direction to when the control unit applies a next pressure change may be equal to or longer than the time T2.

In a case where a time T1 is required for a flow of a liquid in a predetermined section in the channel structure to return to a state before the pressure change in the negative direction is applied after the control unit applies the pressure change in the negative direction, a time interval TIy from when the control unit applies the pressure change in the negative direction to when the control unit applies a next pressure change may be equal to or longer than the time T1.

The microparticle sorting device may further include an actuator, and the control unit may apply the pressure change in the recovery channel by applying a drive waveform to the actuator.

The microparticle sorting device may further include an actuator, and the control unit may apply the pressure change in the positive direction by applying a rising drive waveform Wr to the actuator, and performs the recovery operation Cr.

The microparticle sorting device may further include an actuator, the control unit may apply the pressure change in the negative direction by applying a falling drive waveform Wf to the actuator, and perform the recovery operation Cf, and the control unit may apply the pressure change in the positive direction by applying a rising drive waveform Wr to the actuator, and perform the recovery operation Cr.

The rising drive waveform Wr may be a rising drive waveform with a falling waveform Wfr.

A diameter of the connection channel may be equal to or greater than 60 µm.

The channel structure may further include a liquid supply channel connected to the connection channel such that a second liquid is able to be supplied, the second liquid may be immiscible with the first liquid, and the control unit may recover an emulsion in which the first liquid containing the recovery target particle is contained in the second liquid, in the recovery operation Cr.

The microparticle sorting device may further include a microparticle sorting microchip, and the microparticle sorting microchip may have the channel structure.

Furthermore, the present technology provides a microparticle sorting method including, in a microparticle sorting device that includes a channel structure including a main channel through which a first liquid containing microparticles flows, a recovery channel through which a recovery target particle among the microparticles is recovered, and a connection channel connecting the main channel and the recovery channel, a control step of applying a pressure change in the recovery channel; and a recovery step of recovering the recovery target particle into the recovery channel, in which the control step includes applying a pressure change in a positive direction to generate a pressure vibration PVr in the recovery channel, and the recovery step includes performing a recovery operation Cr of recovering the recovery target particle by a pressure change in a negative direction caused by the pressure vibration PVr.

### BRIEF DESCRIPTION OF DRAWINGS

Fig. 1 is a schematic view illustrating a configuration of a microparticle sorting device according to a first embodiment.
Fig. 2 is an enlarged view of a particle sorting section.
Fig. 3 is a schematic view illustrating a state where a sample fluid and a sheath fluid form a laminar flow.
Fig. 4 is a block diagram illustrating a functional configuration of the microparticle sorting device according to the first embodiment.
Fig. 5 is a plan view illustrating an example of a microparticle sorting microchip.
Fig. 6 is a perspective view illustrating an example of a microparticle sorting microchip.
Fig. 7 is a sectional view in a direction along line X-X of Fig. 5.
Fig. 8 is a diagram illustrating an example of a drive waveform applied to an actuator.
Fig. 9 is a diagram illustrating an analysis result in a simulation regarding a pressure change in a pressure chamber and a flow rate change in a connection channel.
Fig. 10 is a schematic view illustrating a part of a channel structure illustrated in Fig. 1.
Fig. 11 is a diagram illustrating a time relationship among an event signal, a piezo drive voltage, and a flow rate change in a connection channel, in a particle detection unit.
Fig. 12 is a block diagram for describing a configuration of a control unit.
Fig. 13 is a diagram for describing a waveform of an electric signal read by an event detection circuit.
Fig. 14 is a conceptual diagram for describing an event data packet.
Fig. 15 is a diagram for describing gating on a histogram chart and a 2D chart.
Fig. 16 is a schematic view for describing a pulse waveform including a falling drive waveform and a rising drive waveform.
Fig. 17 is a first flowchart illustrating an example of an algorithm embodying a microparticle recovery operation.
Fig. 18 is a second flowchart illustrating an example of an algorithm embodying a microparticle recovery operation.
Fig. 19 is a time chart for describing a microparticle recovery operation.
Fig. 20 is a time chart for describing a comparative example.
Fig. 21 is a time chart for describing a modification example of a microparticle recovery operation.
Fig. 22 is a time chart for describing a modification example of a microparticle recovery operation.
Fig. 23 is a flowchart illustrating second processing in a modification example of a microparticle recovery operation.
Fig. 24 is a drawing-substituting photograph illustrating an emulsion produced in a recovery channel by application of a falling drive waveform and a rising drive waveform.
Fig. 25 is a view illustrating a rising drive waveform with a falling waveform.
Fig. 26 is a view illustrating an analysis result in a simulation of a flow rate change in a connection channel at the time of application of a rising drive waveform and a rising drive waveform with a falling waveform.

### MODE FOR CARRYING OUT THE INVENTION

Hereinafter, preferred modes for carrying out the present technology will be described with reference to the drawings. The embodiments described below illustrate representative embodiments of the present technology, and the scope of the present technology is not limited only to these embodiments. The present technology will be described in the following order.

1. First Embodiment (Microparticle Sorting Device)
   1-1. Outline
   1-2. Basic Configuration
   1-3. Detailed Configuration
   1-4. Simulation Regarding Pressure Change and Flow Rate Change
   1-5. Microparticle Recovery Operation
   1-5-1. Flow of Microparticle Recovery Operation
   1-5-2. Configuration of Control Unit for Performing Microparticle Recovery Operation
   1-5-3. Algorithm Embodying Microparticle Recovery Operation
2. Second Embodiment (Emulsion Generation Device)
   2-1. Outline
   2-2. Configuration and Operation
3. Third Embodiment (Microparticle Sorting Method)
4. Fourth Embodiment (Emulsion Generation Method)

### 1. First Embodiment (Microparticle Sorting Device)

### 1-1. Outline

A microparticle sorting device according to a first embodiment of the present technology includes a channel structure including a main channel through which a first liquid including microparticles flows, a recovery channel through which a recovery target particle among the microparticles is recovered, and a connection channel connecting the main channel and the recovery channel. The microparticle sorting device further includes a control unit that applies a pressure change to the inside of the recovery channel and recovers the recovery target particle into the recovery channel. The control unit performs applies a pressure change in a positive direction to generate a pressure vibration PVr in the recovery channel, and performs a recovery operation Cr of recovering the recovery target particle by a pressure change in a negative direction caused by the pressure vibration PVr.

The microparticle sorting device according to the present embodiment uses the pressure vibration PVr generated by applying a pressure change in the positive direction in the recovery channel, for sorting microparticles. Therefore, a dead time (time during which microparticles are not sorted) generated in the microparticle sorting device in the related art is reduced, and more efficient sorting becomes possible.

The channel structure including the main channel, the recovery channel, and the connection channel may be formed in, for example, a microparticle sorting microchip. That is, the microparticle sorting device according to the present embodiment may include, as an example, a microparticle sorting microchip, and the microparticle sorting microchip may have a channel structure. Hereinafter, an example of the present embodiment will be described with reference to the drawings by taking the microparticle sorting device including the microparticle sorting microchip as an example.

### 1-2. Basic Configuration

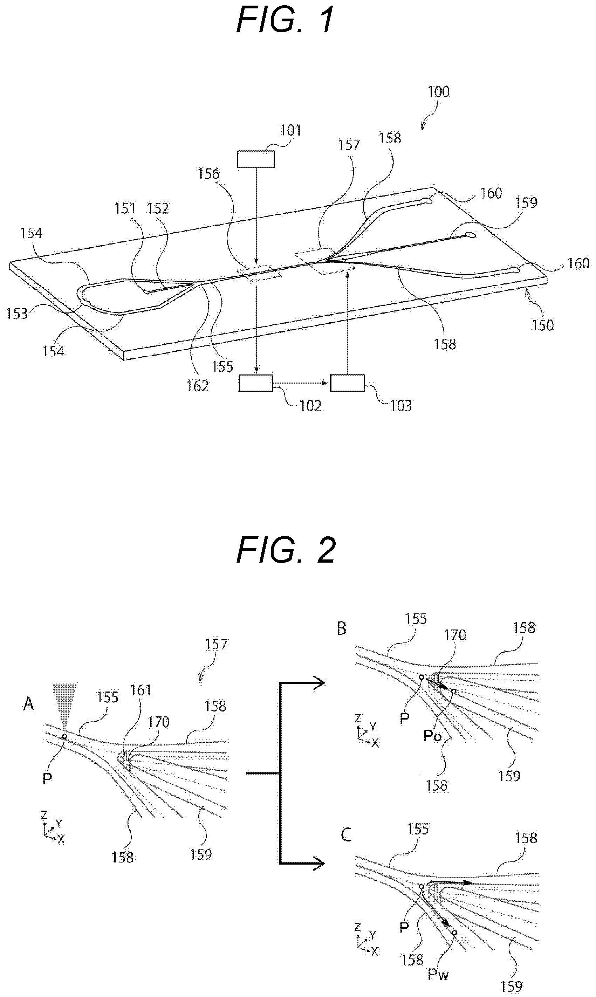

First, a basic configuration of a microparticle sorting device according to a first embodiment will be described. Fig. 1 is a schematic view illustrating a configuration of a microparticle sorting device 100. The microparticle sorting device 100 includes a microparticle sorting microchip 150 (hereinafter, also simply referred to as "microchip 150"). The microchip 150 may be attached to the microparticle sorting device 100 in an exchangeable manner.

The microchip 150 has a channel structure including a main channel 155 through which a first liquid including microparticles flows, a recovery channel 159 through which a recovery target particle among the microparticles is recovered, and a connection channel connecting the main channel 155 and the recovery channel 159. The connection channel is included in a particle sorting section 157 provided in the microparticle sorting microchip 150.

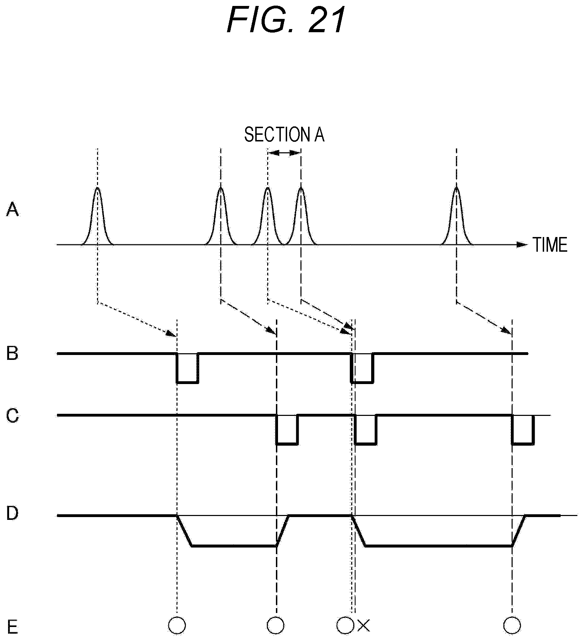

Fig. 2 is an enlarged view of the particle sorting section 157. As illustrated in Fig. 2, a connection channel 170 is provided between the main channel 155 and the recovery channel 159. In the particle sorting section 157, the recovery target particles are recovered into the recovery channel 159. Specifically, the control unit (details will be described later) executes a recovery step of recovering the recovery target particles into the recovery channel 159.

The microchip 150 may be manufactured by a method known in the technical field. For example, the microchip can be manufactured by bonding two substrates in which the above-described channels are formed. The channel may be formed on both of the two substrates, or may be formed on only one of the substrates. In order to make alignment when bonding the substrates easier, the channels may be formed in only one of the substrates.

As a material for forming the microchip 150, a material known in the technical field may be used. Examples include, but are not limited to, for example, polycarbonate, cycloolefin polymer, polypropylene, polydimethylsiloxane (PDMS), polymethylmethacrylate (PMMA), polyethylene, polystyrene, glass, and silicon. Especially, polymer materials such as polycarbonate, cycloolefin polymer, and polypropylene are particularly preferable because they are excellent in processability and may manufacture a microchip inexpensively using a molding device.

Fig. 1 is referred to again. The microparticle sorting device 100 includes a light irradiation unit 101, a particle detection unit 102, and a control unit 103.

The light irradiation unit 101 irradiates the microparticles flowing through the main channel 155 with light (for example, excitation light). That is, the light irradiation unit 101 executes a light irradiation step of irradiating the microparticles flowing through the main channel 155 with light. The light irradiation unit 101 may include a light source that emits light, and an objective lens that condenses the excitation light on the microparticles flowing through a detection region. The light source may be appropriately selected by those skilled in the art depending on the purpose of an analysis, and may be, for example, a laser diode, an SHG laser, a solid-state laser, a gas laser, a high brightness LED, or a halogen lamp, or may be a combination of two or more of them. The light irradiation unit 101 may include other optical elements as needed in addition to the light source and the objective lens.

The particle detection unit 102 detects the microparticle that has passed through a predetermined position in the main channel 155. That is, the particle detection unit 102 executes a particle detection step of detecting the microparticle that has passed through the predetermined position in the main channel 155. More specifically, the particle detection unit 102 detects scattered light and/or fluorescence generated from the microparticle by the light irradiation by the light irradiation unit 101. The particle detection unit 102 may include a condensing lens that condenses the fluorescence and/or scattered light generated from the microparticle, and a detector. As the detector, PMT, photodiode, CCD, CMOS and the like may be used, but the detector is not limited thereto. The particle detection unit 102 may include other optical elements as needed in addition to the condensing lens and the detector. The particle detection unit 102 may further include, for example, a spectroscopic unit. Examples of optical components constituting the spectroscopic unit may include a grating, a prism, and an optical filter, for example. The spectroscopic unit can detect, for example, light having a wavelength that should be detected separately from light having another wavelength. The particle detection unit 102 may convert the detected light into an analog electric signal by photoelectric conversion. The particle detection unit 102 transmits the analog electric signal to the control unit 103.

The control unit 103 determines whether or not the microparticle is the recovery target particle on the basis of a feature of the light detected by the particle detection unit 102. That is, the control unit 103 executes a determination step of determining whether or not the microparticle is the recovery target particle on the basis of a feature of the light detected by the particle detection unit 102. More specifically, the control unit 103 processes the acquired analog electric signal to generate information associated with information regarding a feature of light. For example, the control unit 103 may make a determination based on scattered light such as forward-scattered light, sidescattered light, or back-scattered light, a determination based on fluorescence having the same or a plurality of wavelengths, or a determination based on an image (for example, a dark field image and/or a bright field image, or the like).

Moreover, the control unit 103 operates to recover the microparticle on the basis of the determination result. Specifically, the control unit 103 applies a pressure change to the inside of the recovery channel 159 and recovers the recovery target particle into the recovery channel 159 on the basis of the determination result in the determination step. That is, the control unit 103 executes a control step of applying a pressure change to the inside of the recovery channel 159 and a recovery step of recovering the recovery target particle into the recovery channel 159 on the basis of the determination result in the determination step. Therefore, the flow in the microchip 150 is controlled, and as a result, the microparticle can be recovered.

### 1-3. Detailed Configuration

Next, a detailed configuration of the microparticle sorting device 100 will be described. As illustrated in Fig. 1, the microchip 150 is provided with a sample fluid inlet 151 and a sheath fluid inlet 153. A sample fluid including the first liquid containing microparticles and a sheath fluid including only the first liquid not containing the microparticle are introduced from these inlets into a sample fluid channel 152 and a sheath fluid channel 154, respectively.

The microchip 150 has a channel structure in which the sample fluid channel 152 through which the sample fluid flows and the sheath fluid channel 154 through which the sheath fluid flows merge at a junction 162 to become the main channel 155. In the main channel 155, the sample fluid and the sheath fluid form a laminar flow.

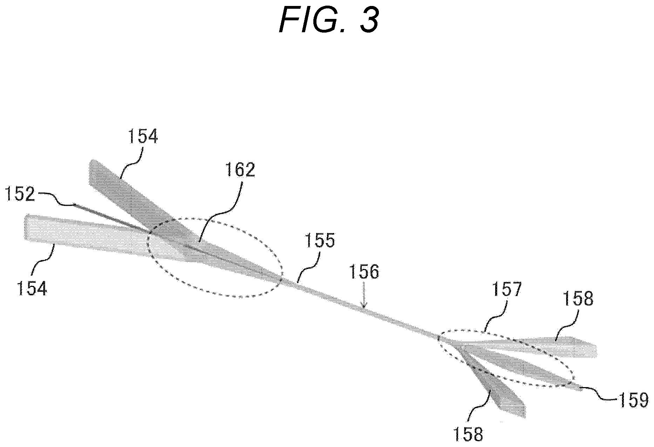

Fig. 3 is a schematic view illustrating a state where the sample fluid and the sheath fluid form the laminar flow. As illustrated in Fig. 3, the sample fluid channel 152 and the sheath fluid channel 154 merge at the junction 162 to form, for example, the laminar flow in which the sample fluid is surrounded by the sheath fluid. Preferably, in the laminar flow, the microparticles are arrayed substantially in a line. As described above, the channel structure described above forms the laminar flow including the microparticles flowing substantially in a line.

The laminar flow described above flows through the main channel 155 toward the particle sorting section 157. Preferably, the microparticles flow in a line in the main channel 155. Therefore, in the irradiation of a particle detection region 156 to be described below with light, light generated by irradiating one microparticle with light and light generated by irradiating another microparticle with light can be easily distinguished from each other.

As illustrated in Figs. 1 and 3, the microchip 150 has the particle detection region 156. As illustrated in Fig. 1, in the particle detection region 156, the light irradiation unit 101 irradiates the microparticles flowing through the main channel 155 with light. The particle detection unit 102 detects light generated by the light irradiation. The control unit 103 determines whether or not the microparticle is the recovery target particle on the basis of the feature of the light detected by the particle detection unit 102. The control unit 103 applies a pressure change to the inside of the recovery channel 159 and recovers the recovery target particle on the basis of the determination result.

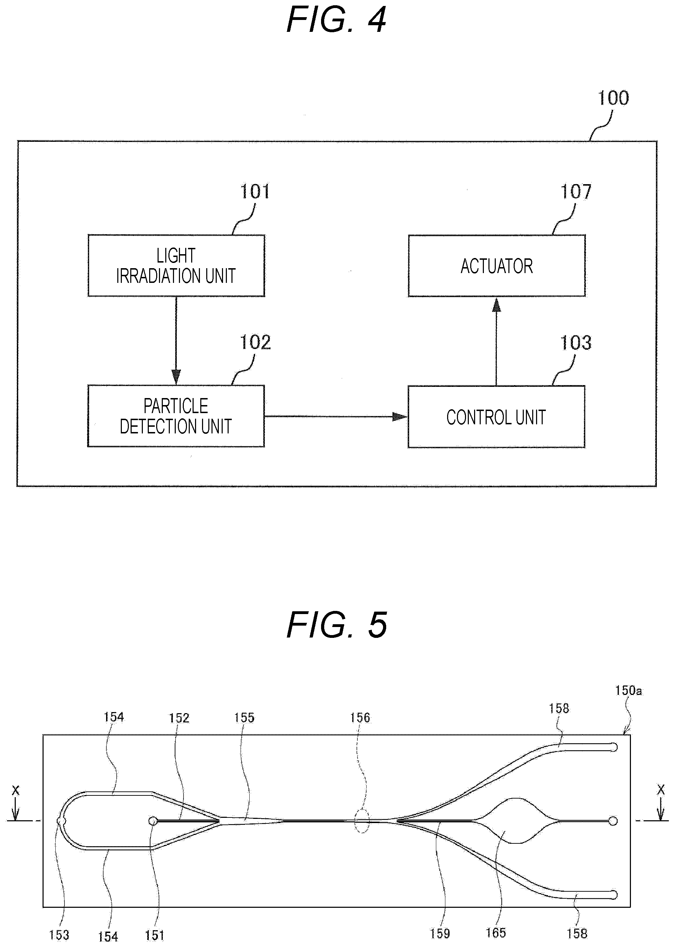

Fig. 4 is a block diagram illustrating a functional configuration of the microparticle sorting device 100. As described above, the microparticle sorting device 100 includes the light irradiation unit 101, the particle detection unit 102, and the control unit 103, as functional units. As illustrated in Fig. 4, the microparticle sorting device 100 may further include an actuator 107. In this case, the control unit 103 can apply a pressure change to the inside of the recovery channel 159 (refer to Fig. 1) by applying a drive waveform to the actuator. The details of the actuator 107 and the control unit 103 will be described later with reference to other drawings.

Fig. 1 is referred to again. The channel structure of the microchip 150 includes the main channel 155 through which the first liquid including microparticles flows, the recovery channel 159 through which the recovery target particle among the microparticles is recovered, and a waste channel 158 through which a microparticle that is not a recovery target is disposed of. In the particle sorting section 157, only in a case where the recovery target particle flows, a flow from the main channel 155 into the recovery channel 159 through the connection channel 170 (refer to Fig. 2) is formed, and the recovery target particle is recovered into the recovery channel 159.

The microparticle sorting control in the particle sorting section 157 will be described with reference to Fig. 2. As illustrated in Fig. 2A, the particle sorting section 157 includes the connection channel 170 that connects the main channel 155 through which microparticles P flow and the recovery channel 159. As illustrated in Fig. 2B, among the microparticles P, a recovery target particle Po flows into the recovery channel 159 through the connection channel 170. As illustrated in Fig. 2C, a microparticle Pw that is not the recovery target flows into the waste channel 158.

In the particle sorting section 157, the laminar flow flowing through the main channel 155 flows into the waste channel 158. In the particle sorting section 157, only in a case where the recovery target particle Po flows, a flow into the recovery channel 159 is formed, and the recovery target particle Po is recovered. When the recovery target particle Po is sucked into the recovery channel 159, the sample fluid that forms the laminar flow or the sample fluid and the sheath fluid that form the laminar flow may also flow to the recovery channel 159.

In order to prevent the microparticle Pw that is not the recovery target, from entering the recovery channel 159, a liquid supply channel 161 may be connected to the connection channel 170 as illustrated in Fig. 2A. The liquid supply channel 161 is provided, for example, in an up-down direction of the connection channel 170 (so as to be substantially perpendicular to an axial direction of the connection channel 170). For example, in a case where the connection channel 170 is parallel to the arrow X direction in Fig. 2, the liquid supply channel 161 may be parallel to the arrow Z direction in Fig. 2. The liquid supply channel 161 is configured to cross the connection channel 170 in the vicinity of the center thereof. From the liquid supply channel 161, a second liquid (liquid other than the first liquid containing microparticles) is introduced into the connection channel 170. Therefore, the second liquid is supplied to the connection channel 170 from the up-down direction. The second liquid supplied to the connection channel 170 flows to both the main channel 155 and the recovery channel 159. Since a flow from the connection channel 170 toward the main channel 155 is formed, the microparticle Pw that is not the recovery target is prevented from entering the recovery channel 159.

The recovery of the recovery target particle into the recovery channel 159 is performed, for example, by driving the actuator 107 (refer to Fig. 4). The actuator 107 may be, for example, an actuator using a pressure element such as a piezoelectric element.

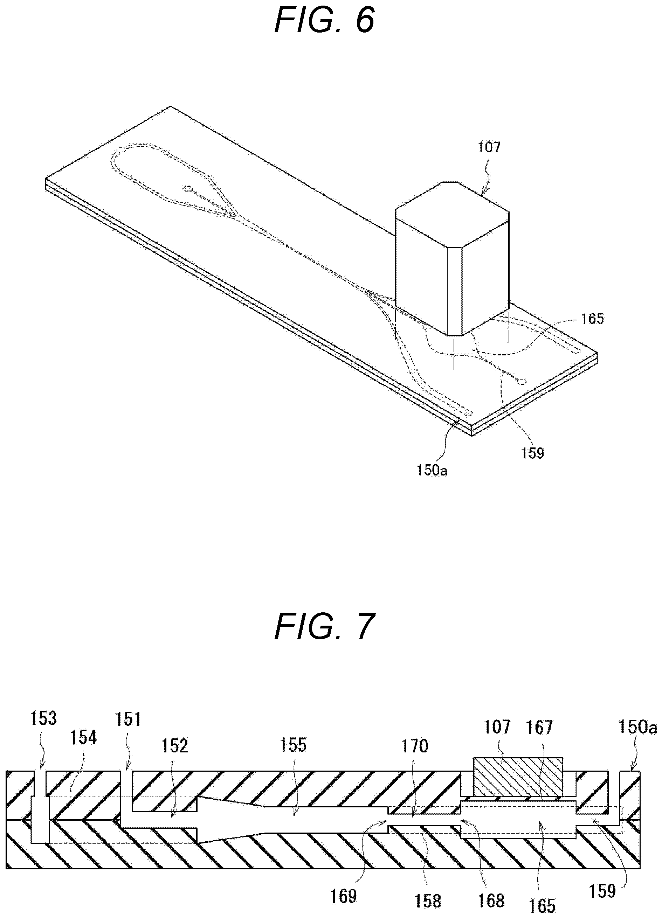

Hereinafter, the actuator 107 and a microparticle sorting microchip 150a (hereinafter, simply referred to as "microchip 150a".) will be described with reference to Figs. 5 to 7. Figs. 5 and 6 are a plan view and a perspective view of the microchip 150a, respectively. Fig. 7 is a sectional view in a direction along line X-X of Fig. 5. The microchip 150a illustrated in Figs. 5 to 7 is different from the microchip 150 illustrated in Fig. 1 in that a pressure chamber 165 is depicted, but the other points are the same.

As illustrated in Figs. 6 and 7, the actuator 107 is disposed on the surface of the microchip 150a to be at a position corresponding to the recovery channel 159 such that the wall of the recovery channel 159 can be deformed. The actuator 107 is in contact with the surface of the microchip 150a.

The recovery channel 159 may include, for example, the pressure chamber 165 that is a region where the inner space is expanded. In this case, the actuator 107 may be disposed on the surface of the microchip 150a to be at a position corresponding to the pressure chamber 165.

The inner space of the pressure chamber 165 is expanded in a planar direction (width direction of the recovery channel 159) as illustrated in Figs. 5 and 6, and is also expanded in a cross-sectional direction (height direction of the recovery channel 159) as illustrated in Fig. 7. That is, the recovery channel 159 is expanded in the width direction and the height direction in the pressure chamber 165. In other words, the recovery channel 159 is formed so as to make its cross section orthogonal to a flow direction of the sample fluid and the sheath fluid larger in the pressure chamber 165.

The actuator 107 deforms the recovery channel 159 (pressure chamber 165) by an expansion/contraction force generated in accordance with a change in the applied drive voltage. Due to the deformation, the volume of the recovery channel 159 (pressure chamber 165) is changed, and a pressure change is generated in the recovery channel 159 (pressure chamber 165). For example, when the actuator 107 is contracted, the volume of the pressure chamber 165 is increased, and the pressure in the pressure chamber 165 is changed in the negative direction. For example, when the actuator 107 is expanded, the volume of the pressure chamber 165 is decreased, and the pressure in the pressure chamber 165 is changed in the positive direction.

In order to efficiently transmit the expansion/contraction force of the actuator 107 into the recovery channel 159 (pressure chamber 165), it is preferable that the surface of the microchip 150a is recessed at a position corresponding to the pressure chamber 165, and the actuator 107 is disposed in the recess as illustrated in Fig. 7. Therefore, a displacement plate 167 that is in contact with the actuator 107 and constitutes a part of the pressure chamber 165 can be thinned. When the displacement plate 167 is thin, the displacement plate 167 is easily displaced as the actuator 107 is expanded and contracted, so that the volume of the pressure chamber 165 can be easily changed.

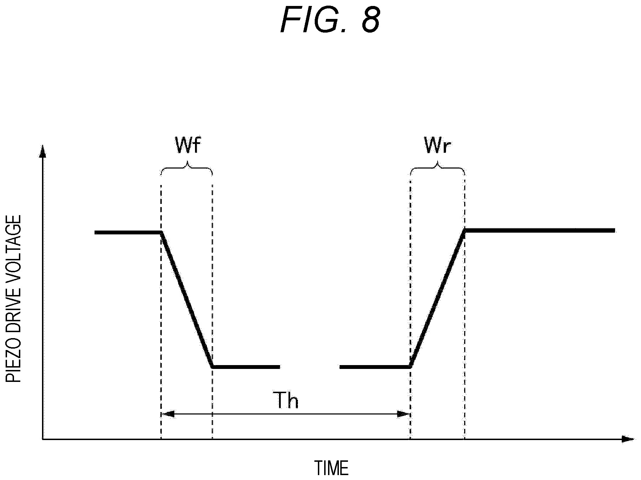

In order to generate the expansion/contraction force in the actuator 107, the control unit 103 (refer to Fig. 4) applies a predetermined drive waveform to the actuator 107. Fig. 8 is a diagram illustrating an example of the drive waveform applied to the actuator 107. As illustrated in Fig. 8, the drive waveform may include a falling drive waveform Wf (falling slope) and a rising drive waveform Wr (rising slope).

For example, the control unit 103 applies the falling drive waveform Wf to the actuator 107. The actuator 107 illustrated in Figs. 6 and 7 is contracted, the pressure chamber 165 is deformed in a direction in which the volume is increased, and a pressure change in the negative direction is generated in the pressure chamber 165. Furthermore, for example, the control unit 103 applies the rising drive waveform Wr to the actuator 107. The actuator 107 illustrated in Figs. 6 and 7 is expanded, the pressure chamber 165 is deformed in a direction in which the volume is decreased, and a pressure change in the positive direction is generated in the pressure chamber 165.

As described above, the falling drive waveform Wf illustrated in Fig. 8 is applied to in order apply a pressure change in the negative direction immediately after the application of the drive waveform. The rising drive waveform Wr illustrated in Fig. 8 is applied to in order apply a pressure change in the positive direction immediately after the application of the drive waveform. In the drive waveform, a drive height (voltage) of the falling waveform Wf, a drive height (voltage) of the rising drive waveform Wr, a drive voltage application time (falling slope) of the falling drive waveform Wf, a drive voltage application time (rising slope) of the rising drive waveform Wr, and a time interval Th (drive time interval Th) between the falling drive waveform Wf and the rising waveform Wr are used as control parameters.

### 1-4. Simulation Regarding Pressure Change and Flow Rate Change

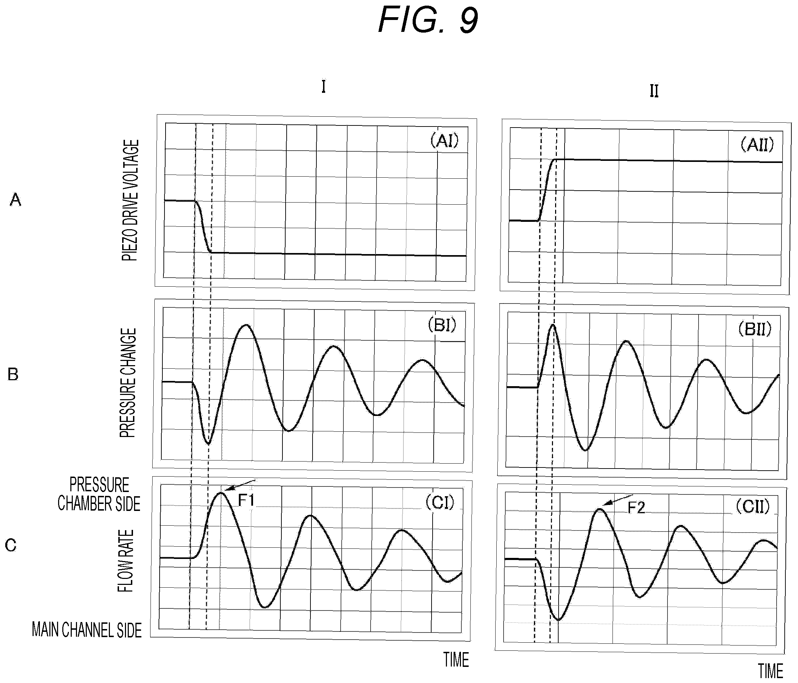

In a case where plastic is used as the material of the microchip 150a and the falling drive waveform Wf and the rising drive waveform Wr are applied as the drive waveforms of the actuator 107 (piezo actuator), a simulation regarding the pressure change in the pressure chamber 165 and the flow rate change in the connection channel 170 is performed. Fig. 9 is a diagram illustrating an analysis result in the simulation. In Fig. 9, (I) on the left side is an analysis result in a case where the falling drive waveform Wf is applied. (II) on the right side is an analysis result in a case where the rising drive waveform Wr is applied. Furthermore, in Fig. 9, an upper stage (A) illustrates a piezo drive voltage, a middle stage (B) illustrates a pressure change of the pressure chamber 165, and a lower stage (C) illustrates a flow rate change in the connection channel 170. In the diagram of the lower stage (C), regarding the flow in the connection channel 170, the upper direction of the lower stage (C) is the direction of the pressure chamber 165 (the direction of the recovery channel 159), and the lower direction of the lower stage (C) is the direction of the main channel 155.

When the falling drive waveform Wf is applied, the pressure chamber 165 is deformed in a direction in which the volume is increased. Immediately after the application of the falling drive waveform Wf, a pressure change in the negative direction is generated in the pressure chamber 165 as illustrated in (BI) of Fig. 9, and the flow in the connection channel 170 accelerates in the direction of the pressure chamber 165 as illustrated in (CI). At this time, an inner wall surface of the channel is elastically deformed to cause elastic vibration, due to a pressure change caused by the fluid suction. This elastic vibration causes a change in the volume of the pressure chamber 165 and causes the pressure vibration in the pressure chamber 165. Due to the pressure vibration, a vibration flow that alternately repeats a flow in a suction direction toward the recovery channel 159 and a flow in a discharge direction opposite to the suction direction is generated in the connection channel 170. Therefore, in a case where the falling drive waveform Wf that applies a pressure change in the negative direction is applied in the pressure chamber 165, a vibration flow toward the recovery channel 159 is generated immediately after the application, and then a vibration flow toward the main channel 155 is generated. The vibration flow toward the recovery channel 159 generated immediately after the application is indicated by an arrow F1 in (CI).

When the rising drive waveform Wr is applied, the pressure chamber 165 is deformed in a direction in which the volume is decreased. Immediately after the application of the rising drive waveform Wr, a pressure change in the positive direction is generated in the pressure chamber 165 as illustrated in (BII) of Fig. 9, and the flow in the connection channel 170 accelerates in the direction of the main channel 155 as illustrated in (CII). At this time, an inner wall surface of the channel is elastically deformed to cause the elastic vibration. The pressure vibration is generated by the elastic vibration. The vibration flow is generated by the pressure vibration. The vibration characteristics of the vibration flow at the time of the application of the rising drive waveform Wr are opposite to the vibration characteristics of the vibration flow generated at the time of the application of the falling drive waveform Wf.

When the pressure change in the positive direction described above occurs immediately after the application of the rising drive waveform Wr, the pressure vibration is generated due to the pressure change. The pressure vibration causes a pressure change in the negative direction next. A vibration flow toward the recovery channel 159 is generated by the pressure change in the negative direction. Therefore, in a case where the rising drive waveform Wr that applies a pressure change in the positive direction is applied in the pressure chamber 165, a vibration flow toward the main channel 155 is generated immediately after the application, and then a vibration flow toward the recovery channel 159 is generated. The vibration flow toward the recovery channel 159 is indicated by an arrow F2 in (CII).

As described above with reference to Fig. 9, the vibration flow flowing toward the recovery channel 159 is generated at the time of application of each of the falling drive waveform Wf and the rising drive waveform Wr. In order to more effectively generate these vibration flows, the diameter of the connection channel 170 (refer to Fig. 7) in the microchip 150a is preferably equal to or greater than 60 µm. A connection channel in a microchip generally used in the microparticle sorting device in the related art can be, for example, about 30 µm. The diameter of the microparticle flowing through the connection channel can be, for example, about 10 µm. On the other hand, the diameter of the connection channel 170 in the present embodiment is preferably greater than the diameter in the related art. Therefore, it is possible to increase the peak of the flow rate of the vibration flow (refer to the arrow F2 in Fig. 9) toward the recovery channel 159 generated after the application of the rising drive waveform Wr. As a result, the suction amount of the liquid at the time of the application of the rising drive waveform Wr can be increased, and the suction force of the microparticle can be increased. The diameter of the microparticle flowing through the connection channel 170 in the present embodiment may be, for example, equal to or greater than 20 µm and equal to or less than 30 µm. As described above, the diameter of the microparticle may be greater than the diameter in the related art. The upper limit of the diameter of the connection channel 170 may be, for example, equal to or less than 90 µm.

The element that can affect the suction force at the time of the application of the rising drive waveform Wr is not limited to the diameter of the connection channel 170 described above. For example, the size of the pressure chamber 165 and/or the recovery channel 159 illustrated in Fig. 7 and the property of the liquid flowing in the microchip (for example, the kinematic viscosity and the flow rate of the liquid) can also affect the suction force described above.

### 1-5. Microparticle Recovery Operation

### 1-5-1. Flow of Microparticle Recovery Operation

The microparticle sorting device 100 according to the present embodiment recovers the microparticles by using the vibration flow (refer to the arrow F2 in Fig. 9) flowing toward the recovery channel 159, which is generated after the application of the rising drive waveform Wr. Preferably, the microparticle sorting device 100 recovers the microparticles by using both the vibration flow (refer to the arrow F1 in Fig. 9) flowing toward the recovery channel 159 generated immediately after the application of the falling drive waveform Wf and the vibration flow (refer to the arrow F2 in Fig. 9) flowing toward the recovery channel 159 generated after the application of the rising drive waveform Wr.

Specifically, the control unit 103 applies a pressure change in the positive direction in the recovery channel 159 to generate the pressure vibration PVr in the recovery channel 159. The control unit 103 performs the recovery operation Cr of recovering the recovery target particle by the pressure change in the negative direction (particularly, the first pressure change in the negative direction) caused by the pressure vibration PVr. That is, the control step executed by the control unit 103 includes applying the pressure change in the positive direction in the recovery channel 159 and generating the pressure vibration PVr in the recovery channel. The recovery step executed by the control unit 103 includes performing the recovery operation Cr of recovering the recovery target particle by the pressure change in the negative direction (particularly, the first pressure change in the negative direction) caused by the pressure vibration PVr.

Preferably, the control unit 103 applies the pressure change in the positive direction in the recovery channel 159 by applying the rising drive waveform Wr to the actuator 107. Therefore, the control unit 103 generates the pressure vibration PVr in the recovery channel 159 and performs the recovery operation Cr described above.

More specifically, the recovery operation Cr described above is an operation of recovering the recovery target particle by the vibration flow flowing toward the recovery channel 159 caused by the pressure change in the negative direction (particularly, the first pressure change in the negative direction) caused by the pressure vibration PVr.

Furthermore, the control unit 103 may apply a pressure change in the negative direction in the recovery channel 159 and perform a recovery operation Cf of recovering the recovery target particle by the pressure change in the negative direction. That is, the control step executed by the control unit 103 includes applying the pressure change in the negative direction in the recovery channel 159. Furthermore, the recovery step executed by the control unit 103 includes performing the recovery operation Cf of recovering the recovery target particle by the pressure change in the negative direction.

Preferably, the control unit 103 applies the pressure change in the negative direction in the recovery channel 159 by applying the falling drive waveform Wf to the actuator 107, and performs the recovery operation Cf described above.

More specifically, the recovery operation Cf described above is an operation of recovering the recovery target particle by the vibration flow flowing toward the recovery channel 159 generated immediately after the application of the falling drive waveform Wf.

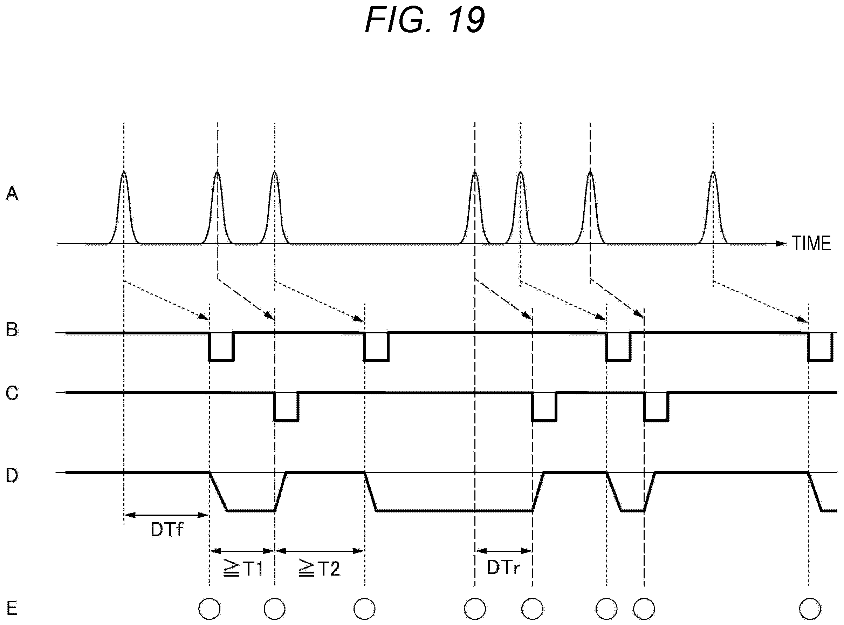

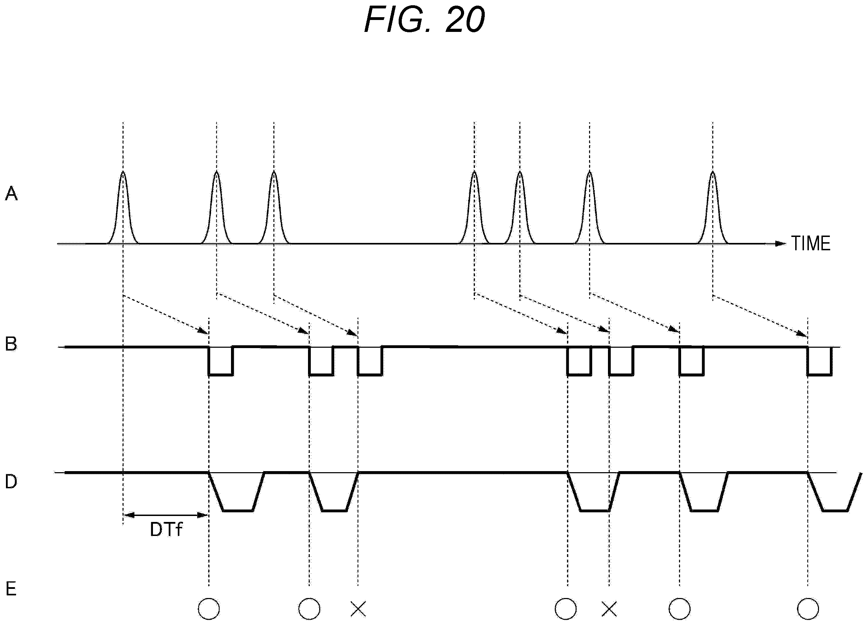

In the microparticle sorting device 100, as an example, the control unit 103 may be configured to alternately perform the recovery operation Cf and the recovery operation Cr. Therefore, the number of times of failure in the recovery of the recovery target particle can be reduced, and the recovery rate can be improved. The point that the recovery failure is reduced by alternately performing the recovery operation Cf and the recovery operation Cr, that is, by alternately applying the falling drive waveform Wf and the rising drive waveform Wr will be described later again with reference to Figs. 19 and 20.

The microparticle sorting device in the related art performs the application of the rising drive waveform Wr as the return operation of the actuator. Therefore, the operation time at the time of the application of the rising drive waveform Wr is a dead time during which the microparticles are not recovered. However, the microparticle sorting device 100 according to the present embodiment uses the application of the rising drive waveform Wr in the microparticle recovery operation. That is, the microparticle sorting device 100 according to the present embodiment can recover the recovery target particle during the operation time at the time of the application of the rising drive waveform Wr. Therefore, the dead time in the related art is reduced, and the recovery target particle can be efficiently collected. That is, a target microparticle can be sorted with high efficiency.

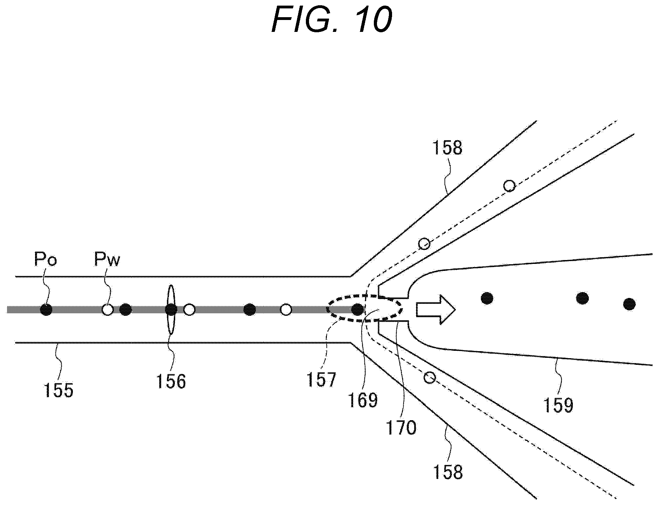

Fig. 10 is a schematic view illustrating a part of the channel structure illustrated in Fig. 1. In order to accurately recover the recovery target particle Po in the recovery channel 159, it is necessary to drive the actuator 107 at an optimum timing. Specifically, it is necessary to drive the actuator 107 to form the flow toward the recovery channel 159 when the recovery target particle Po in the main channel 155 illustrated in Fig. 10 is detected by the particle detection unit 102 (refer to Fig. 1) in the particle detection region 156 and then reaches a communication port 169 of the connection channel 170 (a portion where the connection channel 170 and the main channel 155 communicate with each other). In order to accurately recover the recovery target particle Po, it is necessary to optimize the time (recovery start time) from the detection of the microparticle to the application of the drive waveform to the actuator 107, by appropriately setting an application condition of the drive waveform.

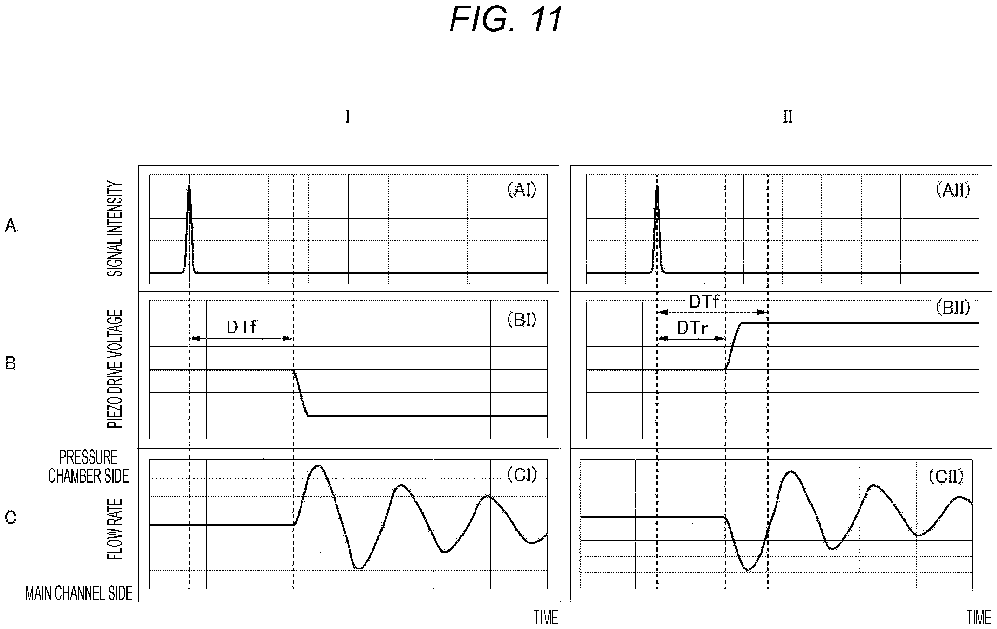

Hereinafter, the relationship between the drive waveform and the recovery time in a case where the microparticles can be recovered in the driving of both the falling drive waveform Wf and the rising drive waveform Wr will be described with reference to Fig. 11. Fig. 11 is a diagram illustrating the time relationship among an event signal, a piezo drive voltage, and a flow rate change in the connection channel 170, in the particle detection unit 102. In Fig. 11, (I) on the left side is a diagram illustrating the time relationship in a case where the falling drive waveform Wf is applied. (II) on the right side is a diagram illustrating the time relationship in a case where the rising drive waveform Wr is applied. Furthermore, in Fig. 11, the upper stage (A) illustrates a signal intensity, the middle stage (B) illustrates the piezo drive voltage, and the lower stage (C) illustrates the flow rate change in the connection channel 170. In the diagram of the lower stage (C), regarding the flow in the connection channel 170, the upper direction of the lower stage (C) is the direction of the pressure chamber 165 (the direction of the recovery channel 159), and the lower direction of the lower stage (C) is the direction of the main channel 155.

The optimum recovery start time at the time of the application of the falling drive waveform Wf is time DTf illustrated in (BI) in Fig. 11. The application of the drive waveform is started after the time DTf from the signal detection by the particle detection unit 102, and the flow rate in the connection channel 170 immediately accelerates to the pressure chamber 165 side (in the suction direction) immediately after the application. The recovery target particle is recovered by the flow toward the pressure chamber 165.

On the other hand, when a temporal change (CII) of the flow rate in the connection channel 170 in a case where the rising drive waveform Wr is applied is observed, the flow rate first accelerates toward the main channel 155, and thereafter, accelerates to the pressure chamber 165 side at the time of the application of the rising drive waveform Wr. Therefore, at the time of the application of the rising drive waveform Wr, it takes more time from the start of application of the drive waveform to the generation of the flow to the pressure chamber 165 side as compared with the application of the falling drive waveform Wf. Therefore, in a case where the rising drive waveform Wr is applied to recover the recovery target particle, it is necessary to advance the timing of applying the drive waveform from the event detection as compared with a case where applying the falling drive waveform Wf is applied. Assuming that the optimal recovery start time at the time of the application of the rising drive waveform Wr is time DTr, the time DTr is shorter than the time DTf as illustrated in (BII). In order to recover the recovery target particle at both the time of the application of the falling drive waveform Wf and the time of the application of the rising drive waveform Wr, it is preferable to drive the actuator 107 at different recovery start times at the time of each application.

In order to drive the actuator 107 at the above-described timing, the control unit 103 may be configured to perform the recovery operation Cf described above after the time DTf from a time point when the particle detection unit 102 detects the microparticle, and perform the recovery operation Cr described above after the time DTr from a time point when the particle detection unit 102 detects the microparticle. In this case, the time DTf and the time DTr may be different from each other, and preferably, the time DTr is shorter than the time DTf.

### 1-5-2. Configuration of Control Unit for Performing Microparticle Recovery Operation

### 1-5-2-1. Overall Configuration of Control Unit

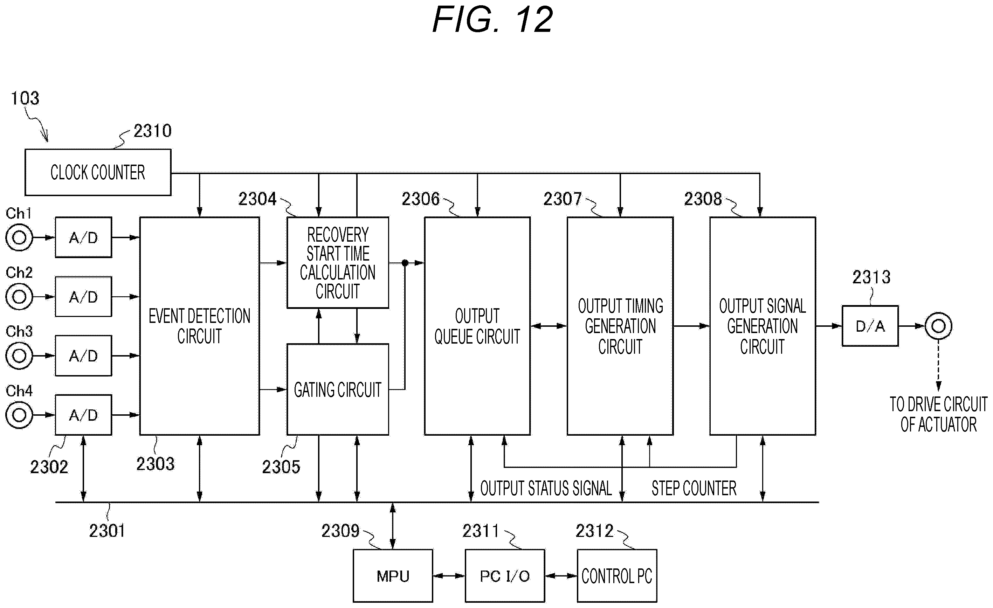

The control unit 103 illustrated in Fig. 4 controls the recovery operation of the recovery target particle by applying the drive voltage to the actuator 107. Hereinafter, the overall configuration of the control unit 103 will be described with reference to Fig. 12.

Fig. 12 is a diagram illustrating a configuration of the control unit 103. The control unit 103 includes a plurality of circuits 2302 to 2309 connected to a bus 2301. Specifically, the circuit denoted by reference numeral 2302 in the drawing is an analog-digital conversion circuit 2302. The circuit denoted by reference numeral 2303 is an event detection circuit 2303. The circuit denoted by reference numeral 2304 is a recovery start time calculation circuit 2304. The circuit denoted by reference numeral 2305 is a gating circuit 2305. The circuit denoted by reference numeral 2306 is an output queue circuit 2306. The circuit denoted by reference numeral 2307 is an output timing generation circuit 2307. The circuit denoted by reference numeral 2308 is an output signal generation circuit 2308. The circuit denoted by reference numeral 2309 is a micro processing unit (MPU) 2309. Note that the analog-digital conversion circuit 2302 is represented as "A/D" in the drawing.

The control unit 103 further includes a clock counter 2310. The clock counter 2310 is connected to the event detection circuit 2303, the recovery start time calculation circuit 2304, the gating circuit 2305, the output queue circuit 2306, the output timing generation circuit 2307, and the output signal generation circuit 2308.

The control unit 103 further includes an input/output interface circuit for personal computer connection (PC I/O unit) 2311 connected to the MPU 2309, and a control PC 2312 connected to the PC I/O unit 2311.

The control unit 103 further includes a digital-analog conversion circuit 2313 connected to the output signal generation circuit 2308. Note that the digital-analog conversion circuit 2313 is represented as "D/A" in the drawing.

### 1-5-2-2. Detailed Configuration of Control Unit

Subsequently, a detailed configuration of the control unit 103 will be described with reference to Fig. 12.

### [Analog-Digital Conversion Circuit]

The analog-digital conversion circuit 2302 is a circuit at a subsequent stage (output side) of the particle detection unit 102 (refer to Fig. 4), and is connected to the particle detection unit 102. Furthermore, a plurality of analog-digital conversion circuits 2302 is arranged. Here, the analog-digital conversion circuit 2302 may be arranged as many as the number of channels (Ch in Fig. 12) of the particle detection unit 102 so as to correspond to each of the plurality of light beams (wavelength regions) detected by the particle detection unit 102. Alternatively, the same number of analog-digital conversion circuits 2302 as the number of sensors of the particle detection unit 102 may be arranged.

The electric signal corresponding to each analog-digital conversion circuit 2302 output from the particle detection unit 102 is input to each analog-digital conversion circuit 2302. The electric signal is an analog signal obtained by the particle detection unit 102 performing the photoelectric conversion on the light (fluorescence and scattered light) detected by the particle detection unit 102. Then, each analog-digital conversion circuit 2302 converts each input electric signal, from an analog signal to a digital signal. Moreover, each analog-digital conversion circuit 2302 outputs the electric signal converted into the digital signal to the subsequent stage.

### [Event Detection Circuit]

The event detection circuit 2303 is a circuit at a subsequent stage of each analog-digital conversion circuit 2302, and is connected to each analog-digital conversion circuit 2302.

The electric signal output from each analog-digital conversion circuit 2302 is input to the event detection circuit 2303. Then, the event detection circuit 2303 uses a specific signal among the respective input electric signals as a trigger signal for recognizing the microparticle. That is, in a case where the value of the trigger signal satisfies a predetermined condition, the event detection circuit 2303 recognizes that each electric signal is detected from the microparticle. Note that the trigger signal may be an electric signal of light having the maximum intensity (for example, forward-scattered light) among the plurality of light beams detected by the particle detection unit 102, but is not limited thereto.

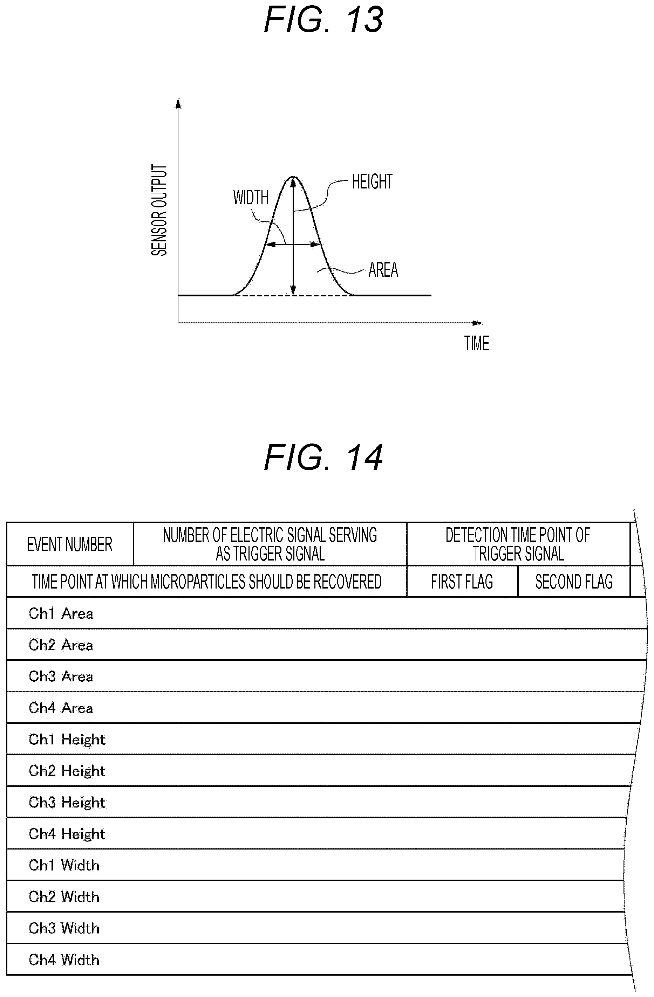

Furthermore, as illustrated in Fig. 13, the event detection circuit 2303 reads the waveform of each input electric signal and calculates the width, height, and area of the read waveform. Moreover, the event detection circuit 2303 creates an event data packet in which each electric signal is associated with one microparticle corresponding thereto, as illustrated in Fig. 14, using each value of the calculated waveform and the like. The event data packet is an example of measurement data for one microparticle. Then, the event detection circuit 2303 outputs the created event data packet to the subsequent stage.

Here, the event data packet includes an item (hereinafter, referred to as a first item) for which data recording is completed at the time of creating the packet. Furthermore, the event data packet includes an item (hereinafter, referred to as a second item) that is updated as the processing related to the electric signal corresponding to the packet after the creation of the packet proceeds.

The first item includes, for example, the following items.
- Width, Height, and Area of Waveform of Electric Signal
- Number of Recognized Microparticle (Event Number)
- Number of Electric Signal Serving as Trigger Signal
- Detection Time Point of Trigger Signal

Note that the number of the electric signal serving as the trigger signal may be a channel number. Furthermore, a signal input from the clock counter 2310 may be used to record the detection time point of the trigger signal. This signal may be obtained by the clock counter 2310 counting a clock signal from a clock generation circuit (not illustrated) input thereto.

On the other hand, the second item includes, for example, the following items.
- Time Point When Microparticles Should Be Recovered
- First Flag Indicating Whether or Not to Recover Microparticles
- Second Flag Indicating Whether or Not to Recover Microparticles

Note that the first flag is a flag set by the gating circuit 2305. On the other hand, the second flag is a flag set by the output queue circuit 2306. The first flag and the second flag are basically set to 1 or 0, and may be used to determine whether or not to recover the corresponding microparticle. Further details of each flag will be described later.

### [Recovery Start Time Calculation Circuit]

As illustrated in Fig. 12, the recovery start time calculation circuit 2304 is a circuit at a subsequent stage of the event detection circuit 2303, and is connected to the event detection circuit 2303.

The event data packet output from the event detection circuit 2303 is input to the recovery start time calculation circuit 2304. Then, on the basis of the input event data packet, the recovery start time calculation circuit 2304 calculates a drive start time point of the actuator 107 to generate a flow toward the recovery channel 159 in the connection channel 170 when the microparticle (recovery target particle) has reached the communication port 169, as the time point when the microparticle included in the second item should be recovered. The recovery start time calculation circuit 2304 calculates both a recovery start time point for the recovery by the application of the falling drive waveform Wf and a recovery start time point for the recovery by the application of the rising drive waveform Wr. The recovery start time point in each drive waveform calculated by the calculation is recorded in the event data packet, and the recorded event data packet is output to the subsequent stage. The calculation of the recovery start time point may be performed by adding a predetermined time (delay time) from the particle detection to the application of the drive waveform, to the detection time point of the trigger signal included in the first item. Furthermore, the recovery start time point may be calculated as a clock counter value.

### [Gating Circuit]

The gating circuit 2305 is a circuit at a subsequent stage of the event detection circuit 2303, and is connected to the event detection circuit 2303.

The event data packet output from the event detection circuit 2303 is input to the gating circuit 2305. Then, the gating circuit 2305 sets the first flag for the input event data packet. Moreover, the gating circuit 2305 outputs the event data packet after setting the first flag to the subsequent stage.

The setting of the first flag may be performed on the basis of a threshold set in advance for a parameter of each electric signal included in the event data packet. In this case, the threshold may be at least one of the width, height, and area of the waveform. Then, in a case where the parameter satisfies the threshold, the value of the first flag may be set to a value (for example, "1") indicating that the recovery of the microparticle is performed. On the other hand, in a case where the parameter does not satisfy the threshold, the value of the first flag may be set to a value (for example, "0") indicating that the recovery of the microparticle is not performed.

Furthermore, the threshold may be a range set in advance by the gating. Here, the gating is processing of enclosing and designating a range corresponding to the recovery target particle on a distribution diagram representing a characteristic distribution of the microparticles in a microparticle population. The gating is performed before the start of the recovery operation of the recovery target particle. Note that the distribution diagram may be created by a graphical user interface (GUI) on the control PC 2312. Furthermore, the gating may be performed by the gating circuit 2305.

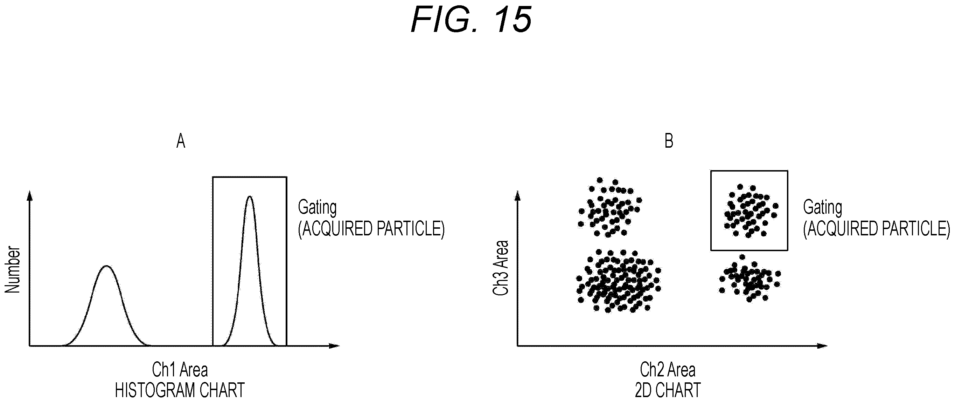

Here, Fig. 15A illustrates a result of gating on a histogram chart as an example of the distribution diagram. In this histogram chart, the horizontal axis represents the parameter, and the vertical axis represents the number of particles. The parameter in the drawing is the area of the waveform of the electric signal corresponding to channel number 1 (Ch1), but other parameters may be used. Then, a rectangular frame in the drawing is a gate designating a range corresponding to the recovery target particle, and the range may be used as the threshold for setting the first flag.

On the other hand, Fig. 15B illustrates a result of gating on a two-dimensional (2D) chart as another example of the distribution diagram. In the 2D chart, different parameters are assigned to the horizontal axis and the vertical axis. The parameter on the horizontal axis in Fig. 15B is the area of the waveform of the electric signal corresponding to channel number 2 (Ch2), and the parameter on the vertical axis is the area of the waveform of the electric signal corresponding to channel number 3 (Ch3). However, parameters other than the areas of the waveforms of both the electric signals may be used. Then, a rectangular frame in the drawing is a gate designating a range corresponding to the recovery target particle, and the range may be used as the threshold for setting the first flag.

### [Output Queue Circuit]

Fig. 12 is referred to again. The output queue circuit 2306 is a circuit at a subsequent stage of the recovery start time calculation circuit 2304 and the gating circuit 2305, and is connected to the recovery start time calculation circuit 2304 and the gating circuit 2305.

The event data packet output from the recovery start time calculation circuit 2304 and the event data packet output from the gating circuit 2305 are input to the output queue circuit 2306. Then, the output queue circuit 2306 integrates (combines) the input both event data packets indicating the same microparticle (that is, the same event number) into one event data packet. In the integrated event data packet, both the delay time point and the first flag are written. Note that the integration of the event data packet may be performed by either of the circuits 2304 and 2305 by the communication between the recovery start time calculation circuit 2304 and the gating circuit 2305. Furthermore, the recovery start time calculation circuit 2304 and the gating circuit 2305 may be connected in series.

Furthermore, the output queue circuit 2306 arranges the sequentially input event data packets of different microparticles, in order of earliest recovery start time point included in the event data packet. Here, an event data packet input to the output queue circuit 2306 and waiting for output of a drive waveform for recovering the corresponding microparticle is defined as an "output queue". The output queue is updated in response to the input of a new event data packet to output queue circuit 2306.

Moreover, the output queue circuit 2306 determines whether or not to recover the microparticle corresponding to each event data packet according to a purity priority mode or an acquisition rate priority mode. Note that the purity priority mode and the acquisition rate priority mode are operation modes of the control unit 103 selectively set in advance before the start of the microparticle recovery operation. The setting of the mode may be performed by the control PC 2312 via various user interfaces.

Here, the purity priority mode is a mode in which in a case where the recovery target particle and a non-recovery target particle flow in a state of being close to each other and there is a high possibility that both particles are captured together, the recovery target particle is intentionally regarded as a "non-recovery target particle (non-acquisition)" to increase the purity of the captured particle. That is, in a case where the purity priority mode is set, the recovery target particle close to the non-recovery target particle is not recover and is discarded.

On the other hand, the acquisition rate priority mode is a mode in which in a case where the recovery target particle and the non-recovery target particle flow in a state of being close to each other and there is a high possibility that both particles are captured together, both particles are acquired and the number of acquired particles is further increased even in a case where the purity of the captured particles is decreased.

Then, the output queue circuit 2306 performs the setting of the second flag on the basis of the result of the determination on the presence or absence of the recovery of the microparticles according to the set mode. At this time, the output queue circuit 2306 may set the second flag to "1" in a case where it is determined that the recovery of the microparticle is performed. On the other hand, the output queue circuit 2306 may set the second flag to "0" in a case where it is determined that the recovery of the microparticle is not performed. Note that the present invention is not limited to such a flag setting aspect.

Furthermore, the output queue circuit 2306 writes an application timing of the drive waveform to be applied to the actuator 107, to a memory. The memory may be a random access memory (RAM). Furthermore, the memory may be connected to the bus 2301, or may be built in the circuit of the control unit 103 or the control PC 2312. Moreover, when writing out the application timing, the setting values of the first flag and the second flag may be referred to. In this case, in a case where both flags are set to values indicating the recovery execution, the application timing at which the corresponding microparticle is recovered may be written. Furthermore, the drive waveform may be a drive voltage.

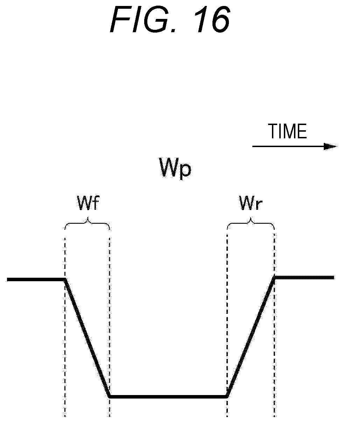

Here, in a case where a pulse waveform Wp is applied as the drive waveform, the output queue circuit 2306 writes the application timing of the falling drive waveform Wf and the application timing of the rising drive waveform Wr in the memory. As illustrated in Fig. 16, the falling drive waveform Wf and the rising drive waveform Wr may be a part of the pulse waveform Wp, the falling drive waveform Wf forms a front portion of the pulse waveform Wp, and the rising drive waveform Wr forms a rear portion of the pulse waveform Wp. Moreover, the height (amplitude) of the falling drive waveform Wf and the height of the rising drive waveform Wr are the same.

The falling drive waveform Wf is applied to deform the pressure chamber 165 in a direction in which the volume is increased and to apply a pressure change in the negative direction immediately after the application of the drive waveform. The force generated in the actuator by the application of the falling drive waveform Wf may be a force that weakens the pressure on the displacement plate 167 (refer to Fig. 7) in order to increase the volume in the pressure chamber 165. In a case where the actuator 107 is a piezoelectric element, a drive waveform for reducing the drive voltage applied to the expanded piezoelectric element to contract the piezoelectric element may be used.

On the other hand, the rising drive waveform Wr is applied to deform the pressure chamber 165 in a direction in which the volume is reduced and to apply a pressure change in the positive direction immediately after the application of the drive waveform. The force generated in the actuator by the application of the rising drive waveform Wr may be a force that strengthens the pressure on the displacement plate 167 (refer to Fig. 7) in order to decrease the volume in the pressure chamber 165. In a case where the actuator 107 is a piezoelectric element, a drive waveform for increasing the drive voltage applied to the contracted piezoelectric element to expand the piezoelectric element may be used.

In a case where the application timings of the falling drive waveform Wf and the rising drive waveform Wr as described above are written to the memory, the output queue circuit 2306 may write the recovery start time point included in the event data packet as the application timing of the falling drive waveform Wf and the application timing of the rising drive waveform Wr.

### [Output Timing Generation Circuit]

As illustrated in Fig. 12, the output timing generation circuit 2307 is connected to the output queue circuit 2306. The output timing generation circuit 2307 reads, from the RAM, the recovery start time point of the event data packet arranged at the forefront of the output queue written to the RAM by the output queue circuit 2306. Then, the output timing generation circuit 2307 generates an output timing signal at the recovery start time point by comparing the read recovery start time point with the value of the signal from the clock counter 2310. Here, the output timing signal is a signal for allocating an output timing of the drive waveform. The output timing generation circuit 2307 outputs the generated output timing signal to the subsequent stage. Moreover, after the output timing signal is output, the output timing generation circuit 2307 may transmit a completion signal to the output queue circuit 2306 to prompt the update of the output queue.

In a case where the drive waveform is a pulse waveform, the output timing generation circuit 2307 refers to the memory in which the application timings of the falling drive waveform Wf and the rising drive waveform Wr have been written by the output queue circuit 2306. Then, the output timing generation circuit 2307 generates an output timing signal for each drive waveform by comparing the application timings of the falling drive waveform Wf and the rising drive waveform Wr in the memory with the value of the signal from the clock counter 2310. Moreover, the output timing generation circuit 2307 outputs the generated output timing signal to the subsequent stage.

### [Output Signal Generation Circuit]

The output signal generation circuit 2308 is a circuit at a subsequent stage of the output timing generation circuit 2307, and is connected to the output timing generation circuit 2307.

The output timing signal output from the output timing generation circuit 2307 is input to the output signal generation circuit 2308. Then, the output signal generation circuit 2308 generates a drive waveform (output signal) corresponding to the input output timing signal and outputs the drive waveform to the subsequent stage. Moreover, the output signal generation circuit 2308 updates a step counter and an output status signal after the drive waveform is output. Note that the output status signal is a signal representing a state of waveform stop/output (enable/disable).

Here, the step counter indicates a stepwise output level of the drive waveform. In other words, the step counter indicates a variation value from a reference value of the drive waveform that varies stepwise with an increase in the number of times of application of the drive waveform. The output difference for each level difference for one stage of the step counter is constant. The step counter and the output status signal may be input to the output queue circuit 2306 or the output timing generation circuit 2307 and used for processing of each of the circuits 2306 and 2307.

In a case where the drive waveform is a pulse waveform, the output signal generation circuit 2308 individually generates and outputs the falling drive waveform Wf and the rising drive waveform Wr.

### [Digital-Analog Conversion Circuit]

The drive waveform output from the output signal generation circuit 2308 is input to the digital-analog conversion circuit 2313. Then, the digital-analog conversion circuit 2313 converts the input drive waveform from a digital signal into an analog signal, and outputs the signal to a drive circuit of the actuator 31.

Note that the control unit 103 in Fig. 12 may be applied to the application of the drive waveform other than the pulse waveform.

### 1-5-3. Algorithm Embodying Microparticle Recovery Operation

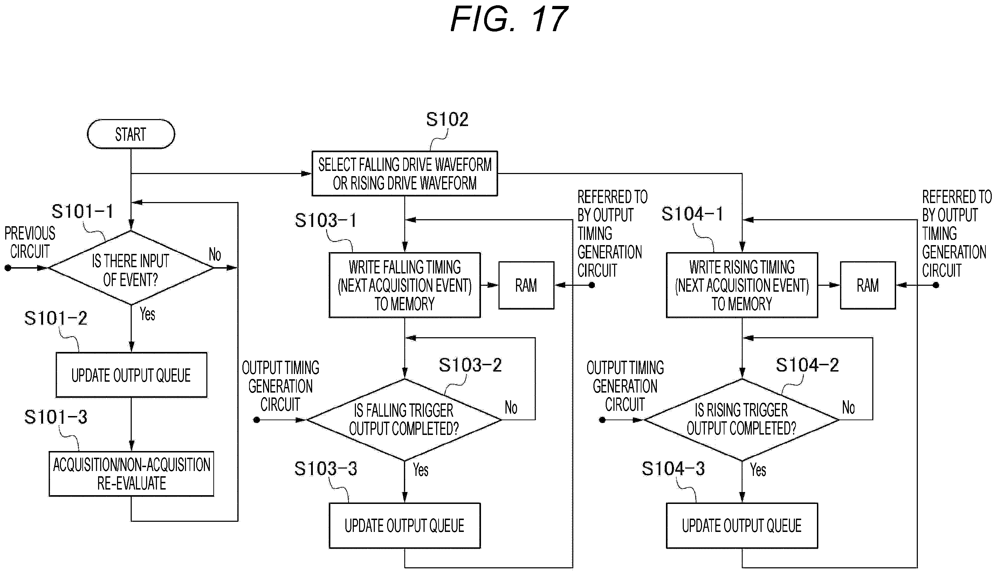

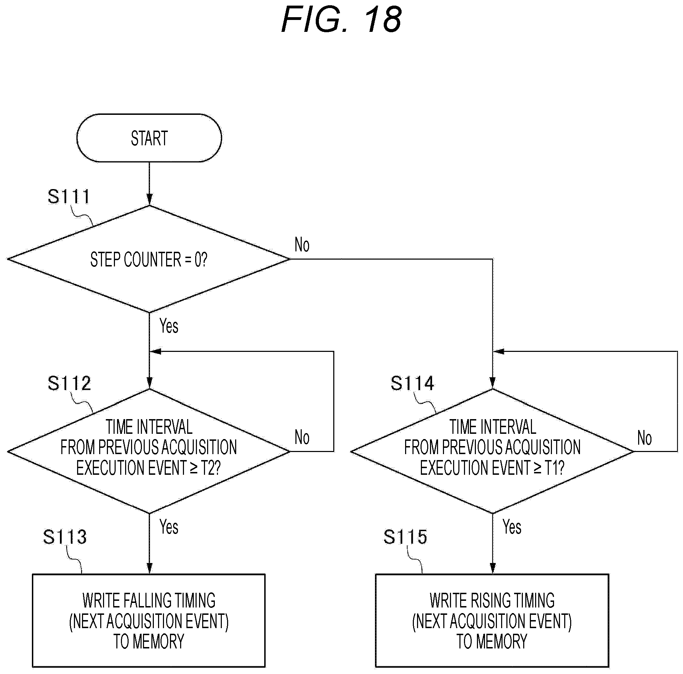

An example of an algorithm embodying a microparticle recovery operation will be described with reference to the flowcharts of Figs. 17 and 18. Figs. 17 and 18 are flowcharts mainly illustrating the operation of the output queue circuit. Fig. 17 illustrates the overall operation, and Fig. 18 illustrates the calculation of the application timings of the falling drive waveform Wf and the rising drive waveform Wr.

### [Overall Operation]

In the flowchart of Fig. 17, the following first processing to fourth processing are performed individually and in parallel.

### [First Processing]

The first processing will be described. First, in step S101-1, it is determined whether or not there is an input of an event (event data packet). For this determination, an event data packet input from a previous circuit (for example, recovery start time calculation circuit and gating circuit) is used. Then, in a case where an affirmative determination result is obtained in step S101-1 (step S101-1: Yes), the processing proceeds to step S101-2, and in a case where a negative determination result is obtained in step S101-1 (step S101-1: No), step S101-1 is repeated.

Next, in step S101-2, the output queue is updated by adding a new event determined that "there is input" in step S101-1 to the output queue.

Finally, in step S101-3, whether or not to recover the microparticle (acquisition/non-acquisition) is reevaluated on the basis of the output queue updated in step S101-2, and the processing returns to step S101-1. Here, the reason why it is expressed as "re-evaluation" is that the evaluation in this step corresponds to processing of evaluating again the event already in the queue (the event already evaluated and the second flag is set). In the case of purity priority, an event added to the queue later may be close to an event added earlier, so that the processing of this step works effectively.

### [Second Processing]

The second processing will be described. In step S102, the selection is made as to whether or not the event (recovery target particle) to be acquired next is recovered by the application of the falling drive waveform Wf or recovered by the application of the rising drive waveform Wr, and the recovery start time point of the selected drive waveform recorded in the event data packet is written to the memory.

Fig. 18 illustrates details of selection of the drive waveform and calculation of the application timing in step S102. In the flowchart of Fig. 18, in S111, it is determined whether or not the value of the step counter is 0. In a case where an affirmative determination result is obtained (step S111: Yes), the processing proceeds to steps S112 and S113, and in a case where a negative determination result is obtained (step S111: No), the processing proceeds to steps S114 and S115. A case where an affirmative determination result is obtained, that is, a case where the value of the step counter is 0 corresponds to a case where the value of the drive waveform is the reference value. A hold value of the drive waveform may be used. This corresponds to a state in which the actuator applies the maximum value of the drive waveform. In a case where the value of the step counter is 0, the processing proceeds to the application of the falling drive waveform Wf from the state in which the maximum value of the drive waveform is applied, and the step counter is updated by +1 stage. On the other hand, in a case where the step counter is not 0, the processing proceeds to the application of the rising drive waveform Wr, and the step counter is updated by -1 stage. In the case of the present algorithm (a preferred aspect of the present technology), since the value of the step counter alternately takes 0 and +1, the application of the falling drive waveform Wf and the application of the rising drive waveform Wr are alternately selected.

Here, T2 described in step S112 and T1 described in S114 will be described. In a case where the recovery target particles are sorted by driving the actuator, the flow is disturbed. Therefore, it is necessary to ensure a return time in the flow field until the timing of recovering the next recovery target particle. In order to ensure the return time, the timing of the pressure change may be**,** for example, as follows.

A time until the flow returns after the application of the falling drive waveform Wf is defined as T1. More specifically, the time required for the flow of the liquid in a predetermined section in the channel structure to return to the state before the pressure change in the negative direction is applied after the control unit 103 applies the pressure change in the negative direction is defined as T1. A time interval TIy from when the control unit 103 applies the pressure change in the negative direction to when the next pressure change is applied is preferably the same as or longer than the time T1. Furthermore, a time until the flow returns after the application of the rising drive waveform Wr is defined as T2**.** More specifically, the time required for the flow of the liquid in a predetermined section in the channel structure to return to the state before the pressure change in the positive direction is applied after the control unit 103 applies the pressure change in the positive direction is defined as T2. A time interval TIz from when the control unit 103 applies the pressure change in the positive direction to when the next pressure change is applied is preferably the same as or longer than the time T2. Note that the times T1 and T2 may be values obtained by adding the operation margin time of the circuit to the time required for the flow return.

In the case of the present algorithm (a preferred aspect of the present technology), the application of the falling drive waveform Wf and the application of the rising drive waveform Wr are alternately performed. Therefore, in a case where an affirmative determination is made in step S111 (step S111: Yes) because the value of the step counter is 0, and the processing proceeds to the application of the falling drive waveform Wf, only in a case where the time interval TIz from the previous acquisition event is equal to or longer than the time T2 (step S112: Yes), the processing proceeds to step S113, and the falling timing is written.

### [Third Processing]

The third processing will be described. Fig. 17 is referred to again. In a case where the application of the falling drive waveform Wf is selected in the second processing (step S102), first, in step S103-1, the application timing of the falling drive waveform Wf for the event to be acquired by the application of the falling drive waveform Wf is written to the memory. The written application timing is referred to by the output timing generation circuit. Next, in step S103-2, it is determined whether or not the falling trigger output of the falling drive waveform Wf is completed. The falling trigger output is that the output timing signal of the falling drive waveform Wf generated by the output timing generation circuit is output to the output signal generation circuit. Finally, in step S103-3, the output queue is updated by deleting the event in which the falling trigger output is completed, from the output queue, and the processing returns to step S103-1.

### [Fourth Processing]

The fourth processing will be described. In a case where the application of the rising drive waveform Wr is selected in the second processing (step S102), first, in step S104-1, the application timing of the rising drive waveform Wr for the event to be acquired by the application of the rising drive waveform Wr is written to the memory. The written application timing is referred to by the output timing generation circuit. Next, in step S104-2, it is determined whether or not the rising trigger output of the rising drive waveform Wr is completed. The rising trigger output is that the output timing signal of the rising drive waveform Wr generated by the output timing generation circuit is output to the output signal generation circuit. Finally, in step S104-**3,** the output queue is updated by deleting the event in which the rising trigger output is completed, from the output queue, and the processing returns to step S104-1.

According to a preferred aspect of the present technology, a drive waveform (drive signal) as illustrated in the time chart of Fig. 19 is applied. In Fig. 19, an event detection time point (A in Fig. 19), a falling timing (B in Fig. 19), a rising timing (C in Fig. 19), a drive signal (D in Fig. 19), and a symbol (E in Fig. 19) indicating success or failure of acquisition of the recovery target particle are illustrated. In a case where the recovery target particles are sorted by the application of the falling drive waveform Wf, the application of the falling drive waveform Wf to the actuator is started after a certain time DTf from the event detection. In a case where the recovery target particles are sorted by the application of the rising drive waveform Wr, the application of the rising drive waveform Wr to the actuator is started by a time DTr shorter than the time DTf from the event detection. The application of the falling drive waveform Wf and the application of the rising drive waveform Wr are alternately repeated. When the drive waveform is applied in this manner, as illustrated in E of the drawing, success or failure of the acquisition of the recovery target particle at each timing of the application of the drive waveform is successful (∘).

As a comparative example of the present embodiment, Fig. 20 illustrates an example of a drive waveform obtained in the microparticle sorting device in the related art, that is, a drive waveform obtained in a case where only a basic pulse waveform is applied. The rising waveform included in the pulse waveform is applied for the return operation of the actuator, and is not used for sorting the recovery target particle. In the comparative example illustrated in Fig. 20, the next falling timing may come before the application of the previous pulse waveform is ended (refer to B and D in Fig. 20). However, in this case, the next falling timing is logically aborted or ignored as during the output of the previous pulse waveform. As a result, for events that come close before and after each other, an acquisition failure (×) occurs as illustrated in E in Fig. 20.

### 1-5-3-1. Modification Example of Algorithm

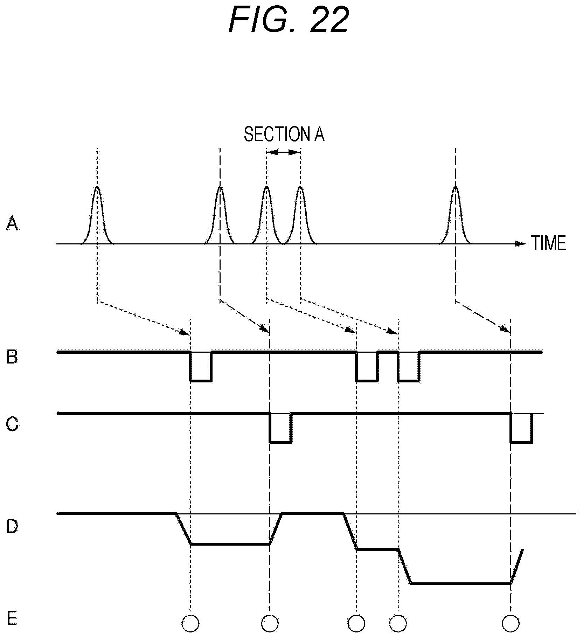

Next, a modification example of the above-described algorithm will be described. In the present modification example, the processing content of the second processing of the output queue circuit is different from the above-described algorithm. Two adjacent events as illustrated in section A of Fig. 21 are considered. In a case where the preceding event in the section A is sorted by the application of the falling drive waveform Wf and the following event is sorted by the application of the rising drive waveform Wr according to the above-described algorithm, the time from the event detection to the recovery operation start is shorter in the rising drive waveform Wr than in the falling drive waveform Wf, and thus the interval of the sorting drive timing is smaller than the event interval. Here, the event interval is TIx. That is, the interval between the time points when two continuous microparticles are detected by the particle detection unit 102 is TIx. Furthermore, (time DTf)- (time DTr) + (time T1) is set as time T3 (that is, T3 = DTf - DTr + T1). In a case where the interval TIx between the time points described above is equal to or smaller than T3 (that is, in the case of TIx ≤ T3), the respective sorting drive timings come close to each other or are reversed, and the sorting by the application of the rising drive waveform Wr of the following event fails. As a result, the acquisition rate of the recovery target particles is decreased. In order to avoid this, as illustrated in Fig. 22, in a case where events close to each other occur as in the section A, the falling drive waveform Wf is continuously applied to perform sorting. Therefore, it is possible to avoid the sorting failure due to the sorting drive timings of the falling drive waveform Wf and the rising drive waveform Wr coming close to each other or being reversed, and further improve the acquisition rate of the recovery target particles.

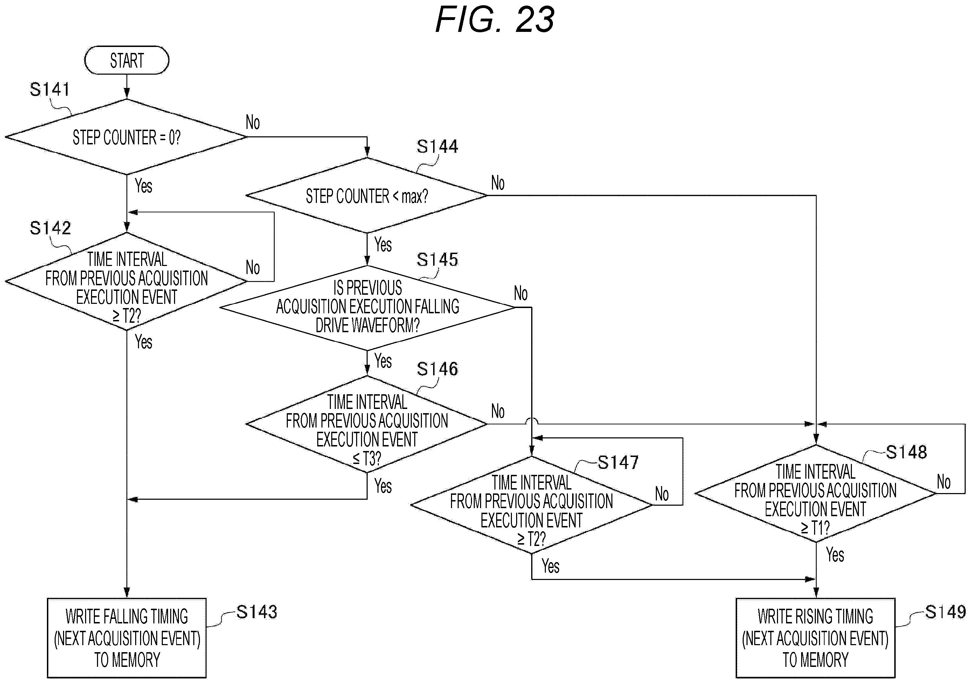

Fig. 23 is a flowchart illustrating the second processing in the present modification example. In a case where the step counter is 0 in step S141 (step S141: Yes), the processing proceeds to steps S142 and S143, and proceeds to writing of the falling timing. In a case where the step counter is not 0 in step S141 (step S141: No), the processing proceeds to step S144. In step S144, in a case where the value of the step counter is max (negative determination in step S144) (step S144: No), the processing proceeds to steps S148 and S149, and proceeds to writing of the rising timing. In a case where the value of the step counter is less than max in step S144 (step S144: Yes), the previous acquisition execution is the falling drive waveform Wf in step S145 (step S145: Yes), and the timing of the previous acquisition execution is equal to or less than the time T3 in step S146 (step S146: Yes), the processing proceeds to step S143, and the writing of the falling timing is performed. That is, in this case, the application of the falling drive waveform Wf is performed continuously from the previous acquisition execution.

On the other hand, in a case where a negative determination is obtained in step S145 (step S145: No), the processing proceeds from step S147 to step S149, and the writing of the rising timing is performed. In a case where a negative determination is obtained in step S146 (step S146: No), the processing proceeds from step S148 to step S149, and the writing of the rising timing is performed. Also in the present modification example, either the application of the falling drive waveform Wf or the application of the rising drive waveform Wr is selected through the flowchart, and sorting by the application of the falling drive waveform Wf is performed continuously by the value of the step counter, the drive waveform of the previous acquisition execution event, and the time interval with the previous acquisition execution event.

As an example of the microparticle sorting device realized by the present modification example described above, the control unit 103 may be configured to perform the recovery operation Cf or the recovery operation Cr according to the interval TIx between the time points when the particle detection unit 102 has detected two continuous microparticles. Furthermore, the control unit 103 may be configured to recover the microparticle detected earlier among the two continuous microparticles by the recovery operation Cf, and recover the microparticle detected later among the two continuous microparticles by the recovery operation Cf in a case where the interval TIx between the time points is shorter than a predetermined value. The case where the interval TIx between the time points is shorter than the predetermined value may be, for example, a case where the interval TIx between the time points is equal to or shorter than the time T3 (that is, in the case of TIx ≤ T3).

### 2. Second Embodiment (Emulsion Generation Device)

### 2-1. Outline

The microparticle sorting device according to a second embodiment of the present technology also provides a microparticle sorting device that recovers an emulsion containing recovery target particles. In the microparticle sorting device according to the second embodiment, the channel structure described above further includes a liquid supply channel connected to the connection channel so as to be able to supply the second liquid. The second liquid is immiscible with the first liquid described above. In the recovery operation Cr, the particle sorting section recovers the emulsion in which the first liquid containing the recovery target particles is contained in the second liquid. Therefore, the microparticle sorting device according to the present embodiment may be an emulsion generation device.

### 2-2. Configuration and Operation

The configuration and operation of the microparticle sorting device according to the second embodiment will be described focusing on differences from the microparticle sorting device according to the first embodiment. The same or equivalent configurations as those of the first embodiment are denoted by the same reference numerals. The configuration and operation without description may be the same as the configuration and operation of the first embodiment described in 1**.** described above.

The microparticle sorting device according to the present embodiment includes the particle sorting section 157 illustrated in Fig. 3**.** In the particle sorting section 157, the liquid supply channel 161 is connected to the connection channel 170 so as to be able to supply the second liquid. The second liquid is immiscible with the first liquid containing microparticles. In the connection channel 170 included in the particle sorting section 157, an emulsion in which the first liquid containing the recovery target particles is contained in the second liquid is formed. Specifically, an emulsion containing the recovery target particle and an emulsion not containing the recovery target particle are formed. The emulsion containing the recovery target particle is recovered in the recovery channel 159.

One of the first liquid and the second liquid used in the present embodiment may be, for example, a hydrophilic liquid, and the other thereof may be a hydrophobic liquid. That is, as an example, the first liquid may be a hydrophilic liquid, and the second liquid may be a hydrophobic liquid. In this case, an emulsion containing a hydrophobic liquid as a dispersion medium and a hydrophilic liquid as a dispersoid can be formed in the particle sorting section 157. As another example, the first liquid may be a hydrophobic liquid, and the second liquid may be a hydrophilic liquid. In this case, an emulsion containing a hydrophilic liquid as a dispersion medium and a hydrophobic liquid as a dispersoid can be formed in the particle sorting section 157.

In the present embodiment, the control unit 103 recovers the emulsion containing the recovery target particle in the recovery operation Cr described above. That is, the recovery step executed by the control unit 103 may include recovering the emulsion containing the recovery target particle in the recovery operation Cr described above.

Preferably, the control unit 103 recovers the emulsion containing the recovery target particle in the recovery operation Cf described above. That is, preferably, the recovery step executed by the control unit 103 may include recovering the emulsion containing the recovery target particle in the recovery operation Cf described above.

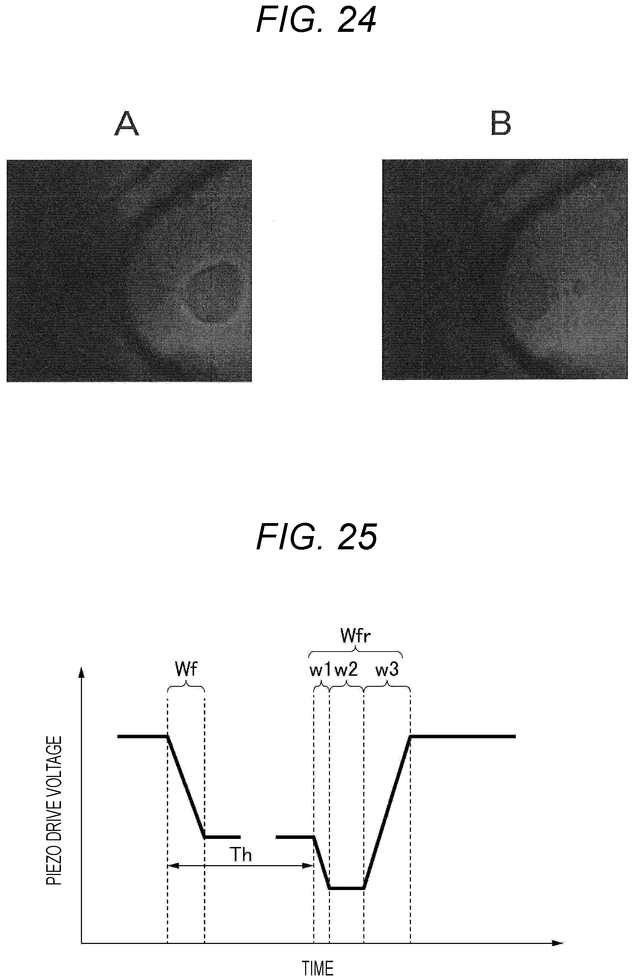

In the present embodiment, an emulsion generated in the recovery channel by the applications of the falling drive waveform Wf and the rising drive waveform Wr is illustrated in Fig. 24. Among the drawing-substituting photographs A and B illustrated in Fig. 24, A illustrates an emulsion at the time of the application of the falling drive waveform Wf, and B illustrates an emulsion at the time of the application of the rising drive waveform Wr. As illustrated, an emulsion containing the microparticles can be generated by applying each of the falling drive waveform Wf and the rising drive waveform Wr. Therefore, generation of an unnecessary emulsion not containing microparticles is reduced, and an emulsion containing microparticles can be generated with high efficiency. Note that, in a case where the application of the rising drive waveform Wr is performed as the return operation of the actuator as in the technique in the related art, the emulsion generated at the time of the application of the rising drive waveform Wr is an unnecessary emulsion not containing microparticles.

In the microparticle sorting device according to the present embodiment, in a case where the applications of the falling drive waveform Wf and the rising drive waveform Wr as illustrated in Fig. 8 are performed, the size of the emulsion generated at the time of the application of the falling drive waveform Wf is slightly different from the size of the emulsion generated at the time of the application of the rising drive waveform Wr, and the size of the emulsion at the time of the application of the rising drive waveform Wr is smaller than size of the emulsion at the time of the application of the falling drive waveform Wf. This is because the flow toward the recovery channel due to the vibration flow at the time of the application of the rising drive waveform Wr is weaker than the flow toward the recovery channel generated immediately after the application of the falling drive waveform Wf. Therefore, in order to further uniformize the size of the emulsion at the time of the applications of the falling drive waveform Wf and the rising drive waveform Wr, a rising drive waveform as illustrated in Fig. 25 is preferably applied.

A rising drive waveform in Fig. 25 includes a second falling waveform w1, a flat waveform w2, and a rising waveform w3 in chronological order. In the present specification, the rising drive waveform in Fig. 25 is referred to as a "rising drive waveform with a falling waveform Wfr".

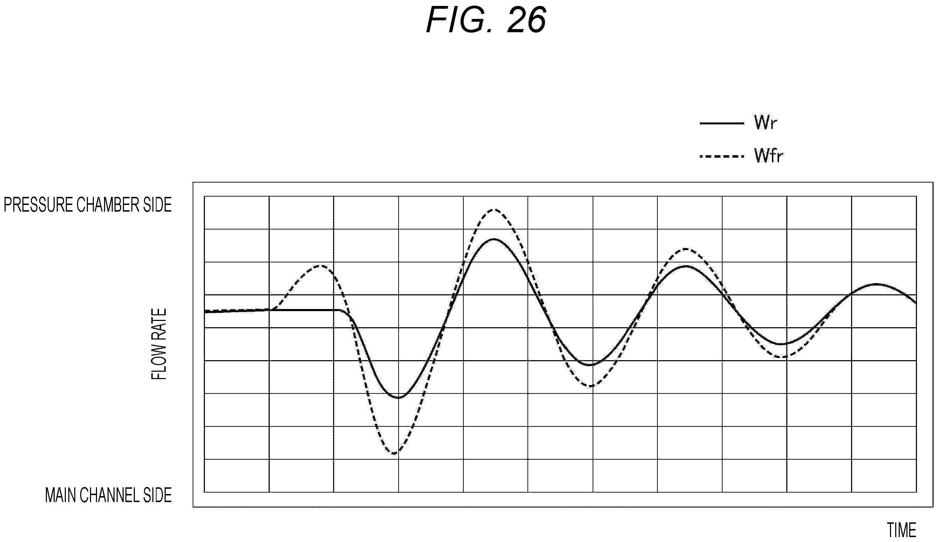

Fig. 26 illustrates an analysis result in a simulation of a flow rate change in the connection channel at the time of the application of the rising drive waveform Wr and a flow rate change in the connection channel at the time of the application of the rising drive waveform with a falling waveform Wfr. It can be seen that the peak of the flow rate toward the pressure chamber direction is increased when the rising drive waveform with a falling waveform Wfr is applied as compared with when the rising drive waveform Wr is applied. Therefore, it is possible to increase the size of the emulsion by increasing the suction amount of the first liquid from the main channel by applying the rising drive waveform with a falling waveform Wfr. Therefore, it is possible to reduce the non-uniformity of the emulsions generated at the time of the application of the falling drive waveform Wf and at the time of the application of the rising drive waveform Wr, and to more accurately generate the emulsion with constant quality.

Note that the rising drive waveform with a falling waveform Wfr may be adopted not only in the second embodiment but also in the first embodiment described above. That is, in the first embodiment, the rising drive waveform may be the rising drive waveform with a falling waveform Wfr.

The suction amount of the first liquid from the main channel can be increased when the rising drive waveform with a falling waveform Wfr is applied as compared with when the rising drive waveform Wr is applied. Therefore, it is possible to reduce the difference between the suction amount at the time of the application of the falling drive waveform Wf and the suction amount at the time of the application of the rising drive waveform Wr, and to more stably perform the sorting of the microparticles.

### 3. Third Embodiment (Microparticle Sorting Method)

The present technology also provides a microparticle sorting method executed in the microparticle sorting device according to the first embodiment. The microparticle sorting method includes a control step of applying the pressure change in the recovery channel and a recovery step of recovering the recovery target particle into the recovery channel, in the microparticle sorting device according to the first embodiment. In the microparticle sorting method, the control step includes applying the pressure change in the positive direction and generating the pressure vibration PVr in the recovery channel. The recovery step includes performing the recovery operation Cr of recovering the recovery target particle by the pressure change in the negative direction caused by the pressure vibration PVr.

The microparticle sorting device used in the microparticle sorting method according to the present technology is the same as the device described in 1**.** described above, and the description thereof also applies to the microparticle sorting method according to the present technology.

### 4. Fourth Embodiment (Emulsion Generation Method)

The present technology also provides an emulsion generation method executed in the emulsion generation device according to the second embodiment. The emulsion generation method includes the recovery step of recovering an emulsion containing recovery target particles.

The emulsion generation device used in the emulsion generation method according to the present technology is the same as the device described in **2.** described above, and the description thereof also applies to the emulsion generation method according to the present technology.

The present technology may also take the following configuration.
[1] A microparticle sorting device including:
   a channel structure including a main channel through which a first liquid containing microparticles flows, a recovery channel through which a recovery target particle among the microparticles is recovered, and a connection channel connecting the main channel and the recovery channel; and
   a control unit that applies a pressure change in the recovery channel and recovers the recovery target particle into the recovery channel,
   in which the control unit performs a recovery operation Cr of applying a pressure change in a positive direction to generate a pressure vibration PVr in the recovery channel and of recovering the recovery target particle by a pressure change in a negative direction caused by the pressure vibration PVr.
[2] The microparticle sorting device according to [1],
   in which the control unit applies the pressure change in the negative direction in the recovery channel and performs a recovery operation Cf of recovering the recovery target particle by the pressure change in the negative direction.
[3] The microparticle sorting device according to [2],
   in which the control unit is configured to alternately perform the recovery operation Cf and the recovery operation Cr.
[4] The microparticle sorting device according to [2] or [3], further including:
   a particle detection unit that detects the microparticle that has passed through a predetermined position in the main channel,
   in which the control unit is configured to perform the recovery operation Cf or the recovery operation Cr according to an interval TIx of time points when the particle detection unit has detected two continuous microparticles.
[5] The microparticle sorting device according to [4],
   in which the control unit is configured to recover the microparticle detected earlier among the two continuous microparticles by the recovery operation Cf, and recover the microparticle detected later among the two continuous microparticles by the recovery operation Cf in a case where the interval TIx between the time points is shorter than a predetermined value.
[6] The microparticle sorting device according to any one of [2] to [5], further including:
   a particle detection unit that detects the microparticle that has passed through a predetermined position in the main channel,
   in which the control unit is configured to perform the recovery operation Cf after a time DTf from a time point when the particle detection unit detects the microparticle, and perform the recovery operation Cr after a time DTr from the time point when the particle detection unit detects the microparticle.
[7] The microparticle sorting device according to [6],
   in which the time DTf and the time DTr are different from each other.
[8] The microparticle sorting device according to [6] or [7],
   in which the time DTr is shorter than the time DTf.
[9] The microparticle sorting device according to any one of [1] to [8],
   in which in a case where a time T2 is required for a flow of a liquid in a predetermined section in the channel structure to return to a state before the pressure change in the positive direction is applied after the control unit applies the pressure change in the positive direction, a time interval TIz from when the control unit applies the pressure change in the positive direction to when the control unit applies a next pressure change is equal to or longer than the time T2.
[10] The microparticle sorting device according to any one of [2] to [8],
   in which in a case where a time T1 is required for a flow of a liquid in a predetermined section in the channel structure to return to a state before the pressure change in the negative direction is applied after the control unit applies the pressure change in the negative direction, a time interval TIy from when the control unit applies the pressure change in the negative direction to when the control unit applies a next pressure change is equal to or longer than the time T1.
[11] The microparticle sorting device according to any one of [1] to [10], further including:
   an actuator,
   in which the control unit applies the pressure change in the recovery channel by applying a drive waveform to the actuator.
[12] The microparticle sorting device according to any one of [1] to [11], further including:
   an actuator,
   in which the control unit applies the pressure change in the positive direction by applying a rising drive waveform Wr to the actuator, and performs the recovery operation Cr.
[13] The microparticle sorting device according to any one of [2] to [8], further including:
   an actuator,
   in which the control unit applies the pressure change in the negative direction by applying a falling drive waveform Wf to the actuator, and performs the recovery operation Cf, and
   the control unit applies the pressure change in the positive direction by applying a rising drive waveform Wr to the actuator, and performs the recovery operation Cr**.**
[14] The microparticle sorting device according to [12] or [13],
   in which the rising drive waveform Wr is a rising drive waveform with a falling waveform Wfr**.**
[15] The microparticle sorting device according to any one of [1] to [14],
   in which a diameter of the connection channel is equal to or greater than 60 µm.
[16] The microparticle sorting device according to any one of [1] to [15],
   in which the channel structure further includes a liquid supply channel connected to the connection channel such that a second liquid is able to be supplied,
   the second liquid is immiscible with the first liquid, and
   the control unit recovers an emulsion in which the first liquid containing the recovery target particle is contained in the second liquid, in the recovery operation Cr.
[17] The microparticle sorting device according to any one of [1] to [16], further including:
   a microparticle sorting microchip,
   in which the microparticle sorting microchip has the channel structure.
[18] A microparticle sorting method including:
   in a microparticle sorting device that includes a channel structure including a main channel through which a first liquid containing microparticles flows, a recovery channel through which a recovery target particle among the microparticles is recovered, and a connection channel connecting the main channel and the recovery channel,
   a control step of applying a pressure change in the recovery channel; and
   a recovery step of recovering the recovery target particle into the recovery channel,
   in which the control step includes applying a pressure change in a positive direction to generate a pressure vibration PVr in the recovery channel, and
   the recovery step includes performing a recovery operation Cr of recovering the recovery target particle by a pressure change in a negative direction caused by the pressure vibration PVr.

### REFERENCE SIGNS LIST

- 100: Microparticle sorting device
- 101: Light irradiation unit
- 102: Particle detection unit
- 103: Control unit
- 107: Actuator
- 109: Second light irradiation unit
- 150, 150a: Microparticle sorting microchip
- 155: Main channel
- 156: Particle detection region
- 157: Particle sorting section
- 158: Waste channel
- 159: Recovery channel
- 165: Pressure chamber
- 170: Connection channel

## Claims

1. A microparticle sorting device comprising:
a channel structure including a main channel through which a first liquid containing microparticles flows, a recovery channel through which a recovery target particle among the microparticles is recovered, and a connection channel connecting the main channel and the recovery channel; and
a control unit that applies a pressure change in the recovery channel and recovers the recovery target particle into the recovery channel,
wherein the control unit applies a pressure change in a positive direction to generate a pressure vibration PVr in the recovery channel, and performs a recovery operation Cr of recovering the recovery target particle by a pressure change in a negative direction caused by the pressure vibration PVr.

2. The microparticle sorting device according to claim 1,
wherein the control unit applies the pressure change in the negative direction in the recovery channel and performs a recovery operation Cf of recovering the recovery target particle by the pressure change in the negative direction.

3. The microparticle sorting device according to claim 2,
wherein the control unit is configured to alternately perform the recovery operation Cf and the recovery operation Cr.

4. The microparticle sorting device according to claim 2, further comprising:
a particle detection unit that detects the microparticle that has passed through a predetermined position in the main channel,
wherein the control unit is configured to perform the recovery operation Cf or the recovery operation Cr according to an interval TIx of time points when the particle detection unit has detected two continuous microparticles.

5. The microparticle sorting device according to claim 4,
wherein the control unit is configured to recover the microparticle detected earlier among the two continuous microparticles by the recovery operation Cf, and recover the microparticle detected later among the two continuous microparticles by the recovery operation Cf in a case where the interval TIx between the time points is shorter than a predetermined value.

6. The microparticle sorting device according to claim 2, further comprising:
a particle detection unit that detects the microparticle that has passed through a predetermined position in the main channel,
wherein the control unit is configured to perform the recovery operation Cf after a time DTf from a time point when the particle detection unit detects the microparticle, and perform the recovery operation Cr after a time DTr from the time point when the particle detection unit detects the microparticle.

7. The microparticle sorting device according to claim 6,
wherein the time DTf and the time DTr are different from each other.

8. The microparticle sorting device according to claim 6,
wherein the time DTr is shorter than the time DTf.

9. The microparticle sorting device according to claim 1,
wherein in a case where a time T2 is required for a flow of a liquid in a predetermined section in the channel structure to return to a state before the pressure change in the positive direction is applied after the control unit applies the pressure change in the positive direction, a time interval TIz from when the control unit applies the pressure change in the positive direction to when the control unit applies a next pressure change is equal to or longer than the time T2.

10. The microparticle sorting device according to claim 2,
wherein in a case where a time T1 is required for a flow of a liquid in a predetermined section in the channel structure to return to a state before the pressure change in the negative direction is applied after the control unit applies the pressure change in the negative direction, a time interval TIy from when the control unit applies the pressure change in the negative direction to when the control unit applies a next pressure change is equal to or longer than the time T1.

11. The microparticle sorting device according to claim 1, further comprising:
an actuator,
wherein the control unit applies the pressure change in the recovery channel by applying a drive waveform to the actuator.

12. The microparticle sorting device according to claim 1, further comprising:
an actuator,
wherein the control unit applies the pressure change in the positive direction by applying a rising drive waveform Wr to the actuator, and performs the recovery operation Cr**.**

13. The microparticle sorting device according to claim 2, further comprising:
an actuator,
wherein the control unit applies the pressure change in the negative direction by applying a falling drive waveform Wf to the actuator, and performs the recovery operation Cf**,** and
the control unit applies the pressure change in the positive direction by applying a rising drive waveform Wr to the actuator, and performs the recovery operation Cr**.**

14. The microparticle sorting device according to claim 12,
wherein the rising drive waveform Wr is a rising drive waveform with a falling waveform Wfr.

15. The microparticle sorting device according to claim 1,
wherein a diameter of the connection channel is equal to or greater than 60 µm.

16. The microparticle sorting device according to claim 1,
wherein the channel structure further includes a liquid supply channel connected to the connection channel such that a second liquid is able to be supplied,
the second liquid is immiscible with the first liquid, and
the control unit recovers an emulsion in which the first liquid containing the recovery target particle is contained in the second liquid, in the recovery operation Cr.

17. The microparticle sorting device according to claim 1, further comprising:
a microparticle sorting microchip,
wherein the microparticle sorting microchip has the channel structure.

18. A microparticle sorting method comprising:
in a microparticle sorting device that includes a channel structure including a main channel through which a first liquid containing microparticles flows, a recovery channel through which a recovery target particle among the microparticles is recovered, and a connection channel connecting the main channel and the recovery channel,
a control step of applying a pressure change in the recovery channel; and
a recovery step of recovering the recovery target particle into the recovery channel,
wherein the control step includes applying a pressure change in a positive direction to generate a pressure vibration PVr in the recovery channel, and
the recovery step includes performing a recovery operation Cr of recovering the recovery target particle by a pressure change in a negative direction caused by the pressure vibration PVr**.**
